# EUROPEAN PATENT SPECIFICATION

(11) **EP 0 996 326 B1**
(45) Date of publication and mention of the grant of the patent: **06.08.2003**
(21) Application number: 98914001.7
(22) Date of filing: 09.04.1998
(51) Int. Cl.: A01F 15/07, B65B 11/00

(54) **A BALE WRAPPING APPARATUS**
BALLENWICKELGERÄT
EMBALLEUSE DE BOTTES

(30) Priority: 09.04.1997 IE 970260; 07.11.1997 IE 970788
(43) Date of publication of application: 03.05.2000
(73) Proprietor: WELLMOUNT LIMITED, Kilmaine County Mayo (IE)
(72) Inventor: McHALE, Padraic, Christopher, County Mayo (IE); McHALE, Martin, County Mayo (IE); O'CONNOR, Patrick, Thomas, County Mayo (IE); HEENEY, James, John, County Mayo (IE); McHALE, William, Bernard, County Galway (IE)
(74) Representative: Gorman, Francis Fergus
(86) International application number: IE9800026
(87) International publication number: WO98044776

(56) References cited:
- EP-A- 0 543 792
- WO-A-94/01997
- WO-A-95/34196

## Description

The present invention relates to a bale wrapping apparatus, and in particular, though not limited to a bale wrapping apparatus which is suitable for wrapping a non-cylindrical bale, for example, a parallelepiped bale, such as, for example, a relatively large parallelepiped bale of square, and more particularly, of rectangular transverse cross-section. Needless to say, the bale wrapping apparatus is also suitable for wrapping a cylindrical bale, of the type which is generally referred to as a round bale. Such parallelepiped and round bales may be bales of any material, but typically, may be of forage, hay, straw or the like.

Such bale wrapping apparatus for wrapping parallelepiped bales are known, for example, PCT Published Application Specification No. WO 92/20210 discloses apparatus for wrapping a parallelepiped bale, and European Patent Application Specification No. EP-A-0,543,792 also discloses apparatus for wrapping a parallelepiped bale. In general, these bale wrapping apparatus suffer from a number of disadvantages. For example, wrapping cycles tend to be relatively long, they are prone to damaging the wrapping material on the bale after the bale has been wrapped, and in may cases, they are prone to failure due to excessive stresses and strains being induced in various components in the bale wrapping apparatus.

Parallelepiped bales of forage are typically wrapped to produce silage. Such bales may be of square or rectangular transverse cross-section, and typically, are relatively large bales of rectangular cross-section being typically of dimensions of the order of 1.6 Metres by 1.2 Metres by 0.7 Metres. Such bales of forage are wrapped with plastics film material which is dispensed from a roll. The film material may be of any desired colour, but in general, is opaque, typically, being black or green. One side of the film material is provided with a self adhesive coating so that as the film material is wrapped around the bale with one layer partly overlapping the previous layer, the overlapping layers bond to each other for maintaining an air-tight and moisture-tight seal between the overlapping layers so that the bale is wrapped in an air-tight and moisture-tight manner.

PCT Specification No. WO 92/20210 discloses a bale wrapping apparatus for wrapping a parallelepiped bale of rectangular cross-section. The bale is placed on a horizontal table which is rotatable about a vertical axis for rotating the bale about the vertical axis. A plurality of rollers and belts mounted on the rotatable table support the bale on the table and rotate the bale about a horizontal axis simultaneously as the bale is being rotated about the vertical axis by the table. Wrapping film material is fed from a stationary roller to the bale and is wrapped onto the bale as the bale is simultaneously rotated about the vertical and horizontal axes. This bale wrapping apparatus is particularly unsuitable for relatively large parallelepiped type bales of rectangular cross-section due to the fact that as the bale is being rotated about its horizontal axis, it is not symmetrical about the vertical rotational axis, and thus out of balance moments and centrifugal force acting on the bale combine to destabilise the bale on the bale wrapping table. In many instances, the bale is projected from the table under the action of centrifugal force acting on the bale while it is disposed non-symmetrically about the vertical axis. The only feasible way of overcoming this problem is to operate the apparatus with the rotatable table rotating at a relatively low speed in order to minimise centrifugal force on the bale, and this, leads to an unacceptably long wrapping cycle. Other problems associated with this bale wrapping apparatus is that it is relatively complex, and also various components, in particular, support arms which support the rollers on the rotatable table are subjected to excessive stresses and strains during wrapping, and are thus prone to failure.

European Specification No. EP-A-0,543,792 discloses a bale wrapping apparatus for wrapping a parallelepiped bale, which in general, is suitable only for wrapping a bale of square cross-section, which typically is in the form of a cube. The bale wrapping apparatus comprises a pair of spaced apart roller units, each of which is provided with a pair of parallel rollers for engaging the bale and rotating the bale about a horizontal axis. A film dispenser carries a roll of wrapping film, and the dispenser is revolved around the bale about a vertical axis as the bale is being rotated about the horizontal axis for dispensing wrapping film onto the bale. The roller units are pivotally carried on the apparatus for pivoting as the bale is being rotated about the horizontal axis by the rollers. The roller units are moveable horizontally relative to each other for accommodating different sizes of bales.

This apparatus suffers from the disadvantage that for effective operation of the apparatus the bale has to be lifted onto the roller units and removed therefrom, also by lifting. Attempts to lower a wrapped bale between the roller units have been unsuccessful. To lower a wrapped bale between the units, it is necessary to move the roller units horizontally outwardly from each other so that the bale can be lowered between the roller units. However, it has been found that as the bale is passing downwardly between the roller units the wrapping film on the bale snags on the rollers, thus leading to stretching and tearing of the wrapping film.

Another bale wrapping apparatus for wrapping a parallelepiped bale is disclosed in PCT Specification No. WO 94/01997 of Fykse et al. The apparatus of Fykse comprises a framework which is suitable for towing behind a tractor. A pair of bale lifting cradles are carried on a pair of carrier arms which in turn are pivotally connected to the framework. The bale lifting cradles each carry a pair of rollers for engaging a bale. The carrier arms urge the bale lifting cradles from an inoperative position on respective opposite sides of the bale lying on the ground for engaging the bale and raising the bale from the ground to a bale wrapping location. As the bale lifting cradles are urged from the inoperative position the rollers of the respective bale lifting cradles engage the bale on vertically opposite sides thereof. In the bale wrapping location the bale is supported on the rollers of the bale lifting cradles with the ends and two sides of the bale extending vertically. A film dispenser is then revolved around the bale for wrapping film wrapping material onto the bale around the vertically extending sides and ends of the bale. The bale is then rotated through 90° by the rollers which are carried on the bale lifting cradles and the ends and the unwrapped two sides of the bale are then wrapped by revolving the film dispenser around the bale in the bale wrapping location.

There is therefore a need for a bale wrapping apparatus which overcomes the problems of prior art bale wrappers.

The present invention is directed towards providing such a bale wrapping apparatus.

According to the invention there is provided a bale wrapping apparatus for wrapping a parallelepiped bale with film material, the apparatus comprising a main framework, a pair of spaced apart secondary support means for supporting the bale in a bale wrapping location, a first drive means being provided in at least one of the secondary support means for operating the secondary support means in a first mode for rotating the bale about a first main axis in the bale wrapping location, a pair of carrier means connected to the main framework for carrying the respective secondary support means, the respective carrier means being moveable from a first position with the secondary support means in an inoperative position disposed on respective opposite sides of the bale in a pre-wrapping location to a second position with the secondary support means in an operative position with the bale supported in the bale wrapping location for urging the bale from the pre-wrapping location to the bale wrapping location, and a film carrier for carrying wrapping film, the film carrier being mounted on the main framework and being revolvable about a second main axis about the bale wrapping location for dispensing wrapping film to the bale for wrapping thereof as the bale is being rotated about the first main axis by the respective secondary support means, the second main axis being disposed at an angle greater than zero to the first main axis, wherein a main support means is provided for supporting the bale in the pre-wrapping location, and the respective secondary support means are carried on the carrier means and co-operate with the main support means so that as the secondary support means are being moved from the inoperative position to the operative position the respective secondary support means engage the bale in the pre-wrapping location on the underside of the bale at respective opposite sides of the bale, and move the bale from the pre-wrapping location to the bale wrapping location.

Preferably, the respective carrier means are moveable from the second to the first position for returning the secondary support means from the operative position to the inoperative position for in turn returning a wrapped bale to the main support means with the wrapped bale supported by the respective secondary support means on an underside of the bale at respective opposite sides thereof.

Advantageously, the respective secondary support means are selectively operable in a second mode for maintaining the orientation of the bale substantially constant as the bale is being moved between the bale wrapping location and the main support means.

Ideally, the respective secondary support means are selectively operable in the second mode for maintaining the orientation of the bale constant with the underside of the wrapped bale substantially horizontal as the bale is being moved between the bale wrapping location and the main support means.

In one embodiment of the invention, a detecting means is provided for detecting the orientation of the respective secondary support means relative to the main framework for determining when the underside of a bale in the bale wrapping location is lying in a substantially horizontal plane.

Preferably, one first drive means is provided for each secondary support means, each first drive means being responsive to the detecting means for orienting the bale with its underside lying in a horizontal plane while the bale is supported in the bale wrapping location prior to returning the bale to the main support means.

Advantageously, the respective carrier means are constrained to move in registration with each other.

In one embodiment of the invention, each secondary support means is pivotally carried on its corresponding carrier means about a corresponding first pivot axis, the respective first pivot axes being spaced apart from and parallel to each other and parallel to the first main axis.

Preferably, the detecting means is associated with each secondary support means for detecting the orientation of the respective secondary support means about the respective corresponding first pivot axes relative to the main framework.

Advantageously, the detecting means detects when the angles of orientation of the respective secondary support means about the respective first pivot axes relative to the main framework are similar but of opposite hand for determining when the bale in the bale wrapping location is horizontal.

Ideally, during a wrapping cycle the respective secondary support means oscillate about their corresponding first pivot axes a plurality of times, and during a wrapping cycle the angles of orientation of the respective secondary support means about their corresponding first pivot axes relative to the main framework are similar but of opposite hand a plurality of times.

In one embodiment of the invention, the period of a wrapping cycle is determined by the detecting means having detected the angles of orientation of the secondary support means about the corresponding first pivot axes relative to the main framework being similar but of opposite hand a predetermined number of times.

In another embodiment of the invention, during each rotation of the bale through 360° about the first main axis the angles of orientation of the respective secondary support means about the corresponding first pivot axes relative to the main framework are similar to each other but of opposite hand eight times.

In another embodiment of the invention, as the bale is rotated about the first main axis from an initial position with the underside of the bale horizontal, after each 45° of rotation of the bale about the first main axis the angles of orientation of the respective secondary support means about the main pivot axes relative to the main framework are similar but of opposite hand.

In one embodiment of the invention, each secondary support means comprises a pair of rotatably mounted spaced apart parallel support rollers which are rotatable about respective rotational axes for rotating the bale about the first main axis, the rotational axes of the respective support rollers being parallel to the first pivot axes.

Preferably, each first drive means is operably coupled to at least one of the support rollers of the corresponding secondary support means for rotating the support roller for in turn rotating the bale about the first main axis.

Advantageously, each first drive means is operably coupled to the two corresponding support rollers of the corresponding secondary support means.

Preferably, the support rollers are located in the respective secondary support means so that one of the support rollers of each secondary support means engages the bale adjacent the underside thereof as the respective secondary support means are being moved into engagement or out of engagement with the bale.

Advantageously, the secondary support means are carried on the respective carrier means so that one of the support rollers of each secondary support means engages an underside of the bale while the other support roller of each secondary support means engages an adjacent upstanding side of the bale as the secondary support means are being moved into or out of engagement with the bale.

Advantageously, the secondary support means are carried on the corresponding carrier means so that the secondary support means engage or disengage the bale on the main support means, with the respective secondary support means orientated such that the rotational axes of the support rollers of the respective secondary support means lying in respective planes which extend at similar angles to a horizontal plane but of opposite hand.

In a further embodiment of the invention, when the secondary support means are in the operative position for supporting a bale in the bale wrapping location, and the respective rotational axes of the respective pairs of support rollers lie in a common horizontal plane, the first pivot axis of each secondary support means lies beneath the common horizontal plane containing the rotational axes of the support rollers of the secondary support means.

In another embodiment of the invention, the respective first drive means rotate the support rollers in the same rotational direction relative to each other for rotating the bale about the first main axis.

In a further embodiment of the invention, each first drive means is mounted on the corresponding carrier means and drives the corresponding support rollers through a drive transmission means.

Preferably, the transmission means comprises a drive transmission element which is co-axial with the corresponding first pivot axis for transmitting drive from the corresponding first drive means to the corresponding support rollers through the first pivot axis.

Advantageously, each first drive means comprises a first drive motor. Advantageously, each first drive motor is an hydraulic motor.

In another embodiment of the invention, each first drive motor is supplied by an hydraulic circuit, the respective first drive motors being connected to the hydraulic circuit so that the respective drive motors are driven at substantially similar speeds.

Preferably, the first drive motors are connected in series in the hydraulic circuit.

Advantageously, the first drive motors are selectively operable for operating the respective secondary support means in the second mode.

Ideally, the first drive motors are selectively connectable so that the first drive motors rotate in opposite senses to each other, and either one of the first drive motors may act as a pump for pumping hydraulic fluid through the other of the first drive motors for driving thereof, for operating the secondary support means in the second mode.

In one embodiment of the invention, the hydraulic circuit comprises a connecting means for selectively connecting the first drive motors in parallel with each other and a means for disconnecting the first drive motors from the hydraulic circuit so that either one of the first drive motors can act as a pump for driving the other of the said first drive motors.

In another embodiment of the invention, each secondary support means comprises a pair of spaced apart support members for rotatably carrying the corresponding pair of support rollers.

Preferably, the support members of each secondary support means are carried on the corresponding carrier means about the corresponding first pivot axis.

In one embodiment of the invention, a means is provided for urging the respective secondary support means in directions about the corresponding first pivot axes against the directions in which the weight of the bale would tend to urge the respective secondary support means. In another embodiment of the invention, the means for urging the secondary support means in the directions about the corresponding first pivot axes against the directions in which the weight of the bale would tend to urge the respective secondary support means comprises a resilient urging means.

In a further embodiment of the invention, each resilient urging means is connected between the corresponding secondary support means and its corresponding carrier means.

Preferably, each first drive means is mounted on the corresponding carrier means and transmits drive through the drive transmission means so that the direction of drive about the corresponding first pivot axis acts for urging the secondary support means in the direction about the first pivot axis opposite to the direction in which the weight of the bale would tend to urge the secondary support means.

In a further embodiment of the invention, a travel limit means is provided between each secondary support means and the main framework for limiting the angular movement of the respective secondary support means about the corresponding first pivot axes.

In another embodiment of the invention, the respective carrier means are pivotally connected to the main framework about corresponding parallel, spaced apart second pivot axes, the respective second pivot axes being parallel to the first pivot axes and being disposed on respective opposite sides of the main support means.

Preferably, the carrier means move the secondary support means in a generally downward outward direction from the operative position.

Ideally, the carrier means urge the secondary support means into engagement with the bale in the pre-wrapping location with an inward upward movement towards the bale.

In one embodiment of the invention, each carrier means comprises an elongated carrier arm.

In another embodiment of the invention, each carrier arm extends from its corresponding second pivot axis towards the bale wrapping location when the respective secondary support means are in the operative position.

In a further embodiment of the invention, an urging means is provided for urging each carrier means between the first and second positions. Preferably, each urging means comprises a ram connected between the corresponding carrier means and the main framework. Advantageously, each ram is provided by an hydraulic ram. Ideally, a pair of rams are provided for each carrier means.

In another embodiment of the invention, the respective secondary support means are raised by the respective carrier means from the inoperative position to the operative position for supporting the bale in the bale wrapping location spaced apart above the main support means.

In a further embodiment of the invention, a second drive means is provided for revolving the film carrier about the second main axis.

In one embodiment of the invention, the second drive means and the first drive means are operably associated with each other so that the second drive means operates in registration with the first drive means. Preferably, the second drive means comprises a second drive motor. Advantageously, the second drive motor is an hydraulic motor.

Ideally, the second drive motor is supplied with hydraulic fluid from the hydraulic circuit, and preferably, the hydraulic circuit connects the second drive motor in series with the first drive motors for driving the respective first and second drive motors in registration with each other.

In one embodiment of the invention, a pair of film carriers are provided. Preferably, the film carriers are disposed at 180° relative to each other around the second main axis.

In a further embodiment of the invention, the main support means comprises a conveying means for conveying a bale to and from the pre-wrapping location.

In one embodiment of the invention, the conveying means extends generally parallel to the first main axis.

In another embodiment of the invention, the conveying means comprises a leading end for engaging a bale on the ground.

In a further embodiment of the invention, the leading end of the conveying means is adapted for engaging beneath a bale resting on the ground for picking up the bale from the ground and for transferring the bale onto the conveying means. Preferably, the conveying means terminates in a trailing end for dispensing a wrapped bale onto the ground. Advantageously, the conveying means comprises a main conveying means which extends through the pre-wrapping location.

In one embodiment of the invention, the main conveying means comprises a slatted chain conveyor.

In another embodiment of the invention, the leading end of the conveying means is provided by a leading conveying means separate from the main conveying means.

In a further embodiment of the invention, the leading conveying means comprises a toothed endless chain conveyor for engaging and transferring the bale from the ground onto the main conveying means.

In one embodiment of the invention, the apparatus is adapted to be towable by a towing vehicle and the leading end of the conveying means extends in a generally forwardly direction relative to the normal forward direction of motion of the apparatus for engaging a bale on the ground as the apparatus is being urged forwardly.

Preferably, the detecting means comprises a pair of detector members which are moveable relative to each other, one of the detector members being connected to one of the secondary support means, and the other detector member being connected to the other of the secondary support means, each detector member being moveable in response to a change in the orientation of the corresponding secondary support means relative to the main framework.

In one embodiment of the invention, a sensing means is mounted on one of the detector members, for sensing when the detector members are in a position relative to each other which corresponds to the respective positions of the secondary support means being such that the respective angles of orientation about the corresponding first pivot axes relative to the main framework of the secondary support means are similar but of opposite hand.

In another embodiment of the invention, a reference means is located on the other of the detector members for being sensed by the sensing means.

Preferably, the sensing means comprises a proximity sensor mounted on the one of the detector means for detecting the proximity of the reference means on the other of the detector members. Advantageously, the detector members are pivotally connected to each other about a common third pivot axis.

Preferably, the detector members are connected to the main framework about their common third pivot axis.

In one embodiment of the invention, the detector members are connected to their corresponding secondary support means by respective connecting means.

In another embodiment of the invention, each connecting means comprises a connecting cable having an inner connecting member slidable within an outer sleeve, one of the inner connecting members and the outer sleeve being connected to the framework, and the other being connected to the secondary support means and the corresponding detector member.

Advantageously, the respective first and second main axes are disposed at an angle of approximately 90° to each other.

In one embodiment of the invention, the first main axis is a horizontal main axis, and in another embodiment of the invention, the second main axis is a vertical main axis.

Additionally, the invention provides a method for wrapping a parallelepiped bale with a film material, the method comprising the steps of urging a pair of secondary support means from an inoperative position disposed on respective opposite sides of a bale in a pre-wrapping location to an operative position with the bale in a bale wrapping location for engaging the bale in the pre-wrapping location and urging the bale from the pre-wrapping location to the bale wrapping location supporting the bale on the secondary support means and rotating the bale in the bale wrapping location about a first main axis by the secondary support means, revolving a roll of the film material around the bale wrapping location about a second main axis for dispensing the film material from the roll onto the bale as the bale is being rotated about the first main axis, the first and second main axes and being at an angle to each other greater than zero, wherein the bale is supported in the pre-wrapping location on a main support means, and the secondary support means are moved from the inoperative position to the operative position for co-operating with the main support means so that as the secondary support means are being moved from the inoperative position to the operative position the respective secondary support means engage the bale in the bale wrapping location on the main support means on the underside of the bale at respective opposite sides of the bale for moving the bale from the pre-wrapping location to the bale wrapping location.

In one embodiment of the invention, the bale is lowered by the respective secondary support means when wrapped from the bale wrapping location to the pre-wrapping location by moving the respective secondary support means from the operative to the inoperative positions, and supporting the bale by the respective secondary support means on the underside of the bale at respective opposite sides of the bale as the bale is being moved from the bale wrapping location to the pre-wrapping location.

In another embodiment of the invention, the orientation of the bale is maintained substantially constant during moving of the bale between the pre-wrapping location and the bale wrapping location.

Preferably, the underside of the bale is maintained in a substantially horizontal plane during moving of the bale between the pre-wrapping location and the bale wrapping location.

In another embodiment of the invention, the number of angular increments of predetermined size through which the bale is rotated about the first main axis are counted for determining a wrapping cycle. Preferably, each increment of 45° of rotation of the bale about the first main axis is counted. Advantageously, each angular increment of rotation of the bale about the first main axis is counted from an initial orientation of the bale with the underside of the bale lying in a substantially horizontal plane.

In a further embodiment of the invention, the bale is oriented with its underside horizontal prior to moving the bale from the bale wrapping location to the pre-wrapping location.

In another embodiment of the invention, the respective first and second main axes are at an angle of 90° to each other.

Preferably, the first main axis is a horizontal axis.

Advantageously, the second main axis is a vertical axis.

Further the invention provides a method for preparing silage from a bale of forage using the method for wrapping a parallelepiped bale according to the invention.

The advantages of the invention are many. By virtue of the fact that the carrier means move the respective secondary support means from an inoperative position into engagement with the bale on the main support means, and then subsequently move the secondary support means with the bale thereon into an operative position with the bale supported in a bale wrapping location, the bale is transferred from the main support means into a bale wrapping location and wrapping of the bale takes place free of the main support means. In particular, by virtue of the fact that the respective secondary support means engage the bale on the main support means on the underside thereof on respective opposite sides of the bale ensures that little damage if any is caused to the bale, as the bale is being transferred to the wrapping location. A particularly important advantage is achieved by virtue of the fact that the carrier means move the respective secondary support means from the operative position for transferring a wrapped bale from the wrapping location onto the main support means, and during the transfer of the bale the bale is supported by the secondary support means on the underside of the bale until the bale is placed on the main support means. This ensures that the wrapped bale is supported at all times on its underside as the bale is being transferred from the bale wrapping location to the main support means, thus avoiding any danger of relative slipping between the bale and the secondary support means, which would otherwise lead to stretching and tearing of the wrapping film. The wrapped bale is then placed on the main support means by the secondary support means with no danger of damage to the wrapping film on the wrapped bale.

The avoidance of damage to the wrapping film on the wrapped bale is further enhanced by virtue of the fact that the respective secondary support means are selectively operable in a second mode for maintaining the orientation of the bale constant during transfer of the bale from the bale wrapping location to the main support means, thereby avoiding stretching or tearing of the wrapping film. By maintaining the underside of the bale in a horizontal plane during transfer of the bale from the bale wrapping location onto the main support means further avoids slippage between the wrapped bale and the secondary support means, and also provides that the wrapped bale is placed on the main support means without damage to the wrapping material. The wrapped bale is maintained with its underside in a horizontal plane during transfer from the bale wrapping location to the main support means by virtue of the fact that the respective first drive motors can be selectively connect so that either one of the first drive motors can operate as a pump to drive the other in the opposite sense, thus, if the wrapped bale commences to rotate about the horizontal axis during transfer, the rotating action of the wrapped bale commences to rotate one of the first drive motors which in turn drives the other of the first drive motors for countering the rotation of the bale and returning it to its original horizontal orientation. Thus, by maintaining the underside of the wrapped bale in a substantially horizontal plane during transfer from the bale wrapping location onto the main support means the wrapped bale is placed on the main support means without any danger of damage to the wrapping film.

These advantages are particularly enhanced when the carrier means are pivotally connected to the main framework about the second pivot axes and are pivotal about the second pivot axes for moving the respective secondary support means between the inoperative and the operative positions. As the carrier means urge the respective secondary support means from the inoperative position into engagement with a bale on the main support means the pivoting action of the respective carrier means causes the respective secondary support means to engage the bale on the underside thereof. Thus, further pivoting of the respective carrier means about the second pivot axes lifts the bale from the main support means upwardly into the bale wrapping location. Similarly, the bale is lowered from the bale wrapping location by pivoting of the respective carrier means about the second pivot axes, and thus, as the respective carrier means pivot in a arc downwardly, the respective secondary support means are carried through respective arcs downwardly outwardly relative to the bale wrapping location, and thus, the respective secondary support means disengage the bale as the bale is placed on the main support means with a downward outward action thereby entirely eliminating any danger of damage to the wrapping film on the bale.

A further advantage of the invention is achieved by virtue of pivoting the respective carrier means about the second pivot axes, in that the apparatus is particularly suitable for wrapping parallelepiped bales of different size. For wrapping relatively small parallelepiped bales the carrier means urge the secondary support means into an operative position whereby the spacing between the secondary support means is minimum. In other words, the carrier means pivot through an arc until the first and second pivot axes lie substantially in a horizontal plane. In this position the spacing between the secondary support means is minimised and thus, the secondary support means are in a position for wrapping a relatively small parallelepiped bale. The arc through which the carrier means pivot from the first position to the second position is reduced for accommodating larger parallelepiped bales. The largest parallelepiped bales are accommodated by pivoting the respective carrier means about the second pivot axes from the first to the second position through the smallest arc. However, it will be understood that the respective carrier means should be pivoted from the first position about the second pivot axes through an arc sufficient for causing the respective secondary support means to lift the bale from the main support means into a bale wrapping location whereby the bale clears the main support means as the bale is being rotated about the first main axis.

The invention will be more clearly understood from the following description of a preferred embodiment thereof which is given by way of example only with reference to the accompanying drawings, in which:

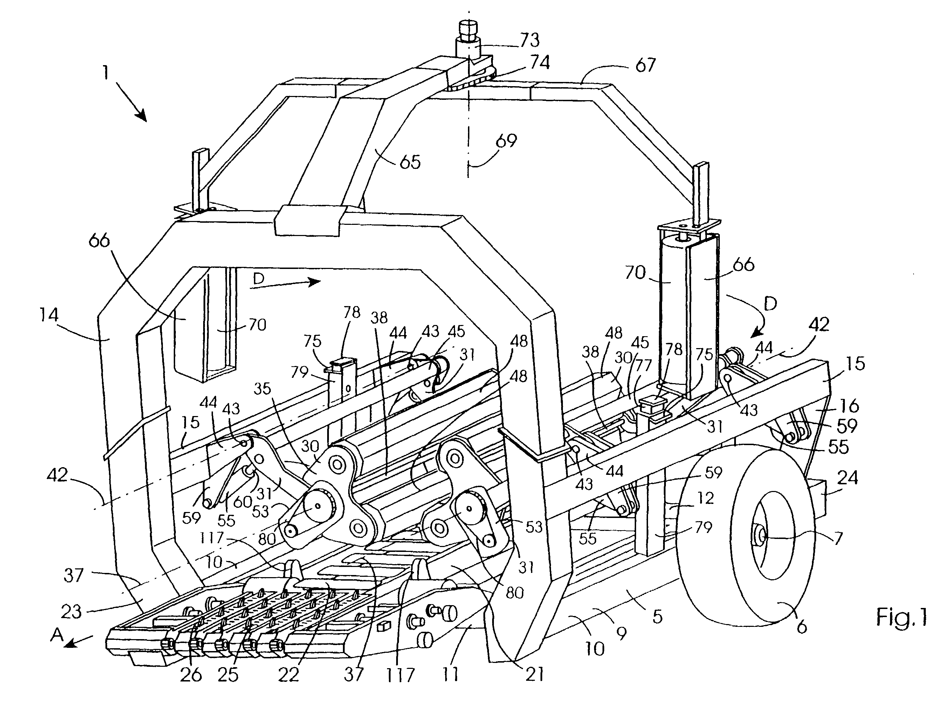

Fig. 1 is a front perspective view of apparatus according to the invention for wrapping a parallelepiped bale,
Fig. 2 is a side elevational view of the apparatus of Fig. 1,
Fig. 3 is a rear perspective view of the apparatus of Fig. 1 with portions of the apparatus removed,

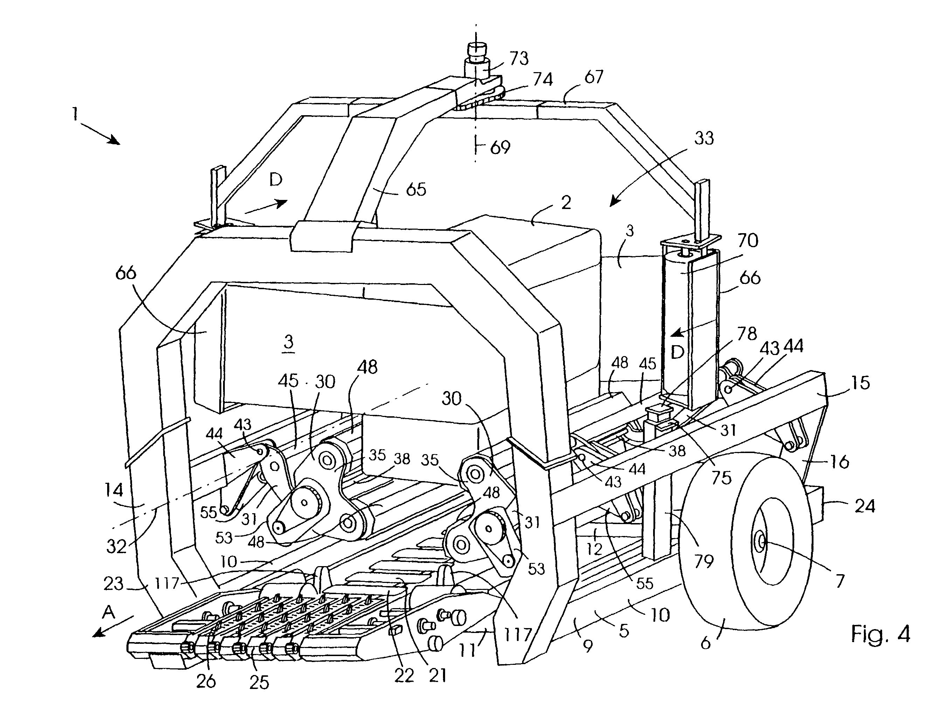

Fig. 4 is a rear perspective view of the apparatus of Fig. 1 in use,

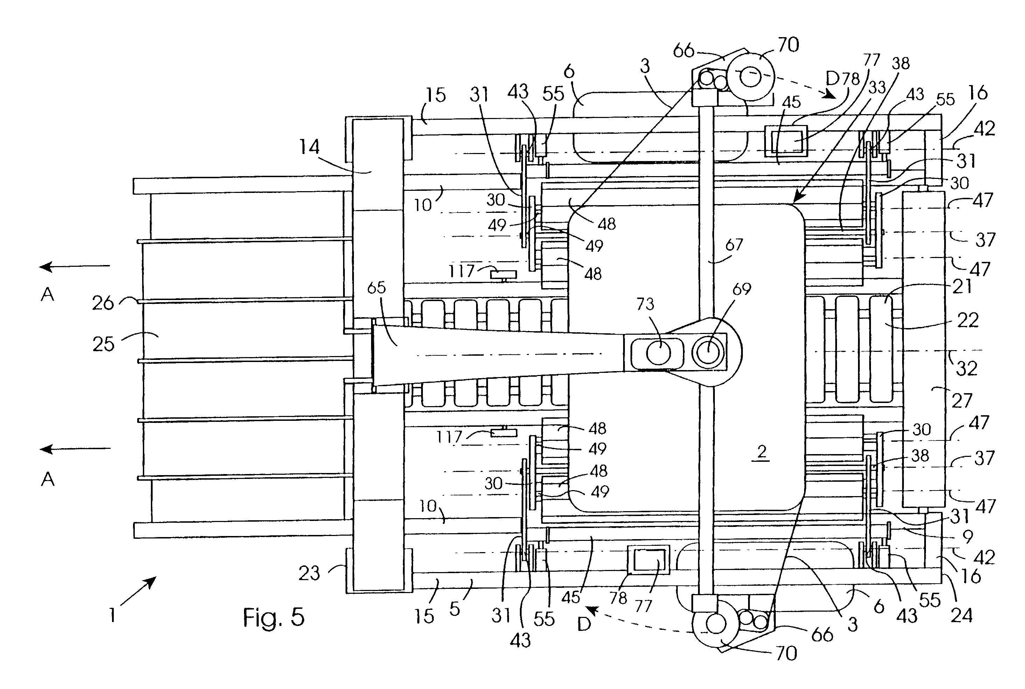

Fig. 5 is a plan view of the apparatus of Fig. 1 in use,
Fig. 6 is a front perspective view of a detail of the apparatus of Fig. 1,
Fig. 7 is a rear perspective view of the detail of Fig. 6,
Fig. 8 is a transverse cross-sectional side elevational view of the detail of Fig. 6,
Fig. 9 is a transverse cross-sectional rear end elevational view of a portion of the apparatus of Fig. 1,
Fig. 10 is a rear end elevational view of the portion of the apparatus of Fig. 9,
Fig. 11 is a rear end view of a portion of the apparatus of Fig. 1 in use,
Fig. 12 is a rear end elevational view of another portion of the apparatus of Fig. 1,
Fig. 13 is a top plan view of the portion of Fig. 12,
Fig. 14 is a circuit diagram of a balancing circuit of the apparatus of Fig. 1,
Fig. 15 is a block diagram of an electronic control circuit of the apparatus of Fig. 1,
Figs. 16(a) to (j) are diagrammatic front end elevational views of a portion of the apparatus of Fig. 1 illustrated in use,
Figs. 17(a) to (h) are diagrammatic rear end elevational views of a portion of the apparatus of Fig. 1 in use,
Figs. 18(a) to (h) are circuit diagrams of an hydraulic control circuit of the apparatus of Fig. 1 illustrating the operational configurations of the control circuit which correspond respectively to the positions of the apparatus illustrated in Figs. 17(a) to (h), respectively, and
Fig. 19 is a view similar to Fig. 11 of the portion of the apparatus in a still further different position.

Referring to the drawings there is illustrated a bale wrapping apparatus according to the invention, in this case, a bale wrapper indicated generally by the reference numeral 1 for wrapping a parallelepiped bale, typically, a relatively large bale 2 of forage of rectangular cross-section with film material, namely, bale wrapping film 3, which is typically a stretch type black plastics film material, which in general, is provided with a pressure sensitive adhesive on one surface thereof. The bale wrapping film 3 may be of any other colour, other common colours are green and white, but in general, the bale wrapping film is opaque. Such stretch plastics wrapping film material will be well known to those skilled in the art, and is typically used for wrapping large cylindrical bales, typically, referred to as round bales, large parallelepiped bales, which typically, are referred to as large square or rectangular bales, depending on the cross-section of the bale in a vertical plane. The bale wrapper 1 is particularly suitable for wrapping large parallelepiped bales of forage material, namely, grass for forming silage. Typically, rectangular bales are of length of 1.6 Metres, width of 1.2 Metres, and height of at least 0.7 Metres, although, needless to say, the bale wrapper 1 is suitable for wrapping other sizes and shapes of bale, for example, a bale of square cross-section in a vertical plane, and indeed, cylindrical bales, although, in general, the bale wrapper 1 is provided for wrapping relatively large rectangular cross-section bales.

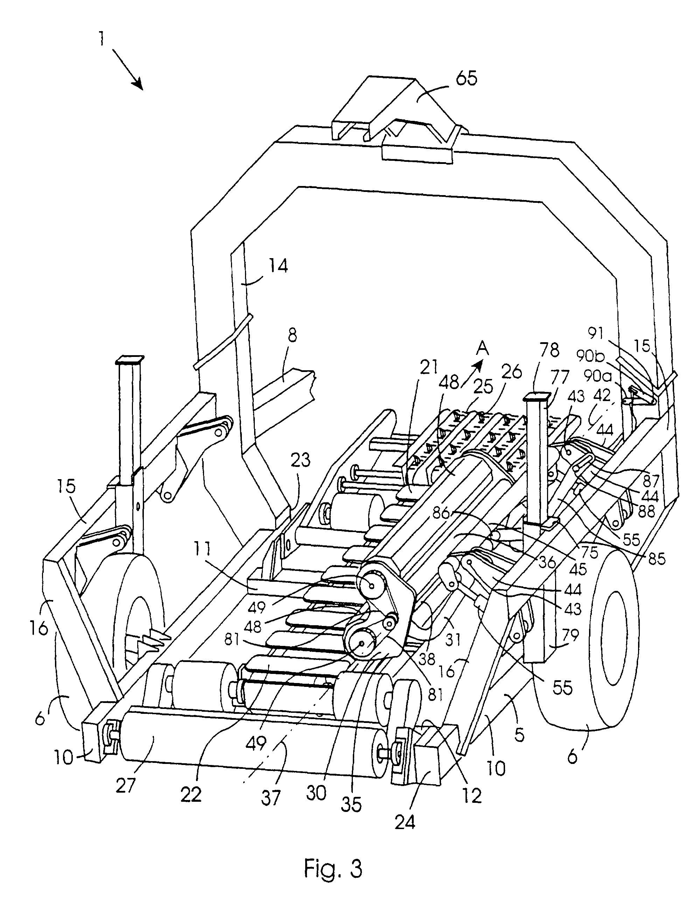

The bale wrapper 1 comprises a main framework 5 of steel which is of box-section. The main framework 5 is carried on a pair of ground engaging wheels 6 which are rotatably carried on stub axels 7 which extend from the main framework 5. The main framework 5 comprises a base frame 9 which is formed by a pair of lower side members 10 which are joined by a front cross member 11 and a rear cross member 12. An arch frame 14 extends upwardly from the base frame 9 adjacent the front cross member 11, and a pair of upper side members 15 extend rearwardly from the arch frame 14 and are supported by rear upstanding members 16 which extend upwardly from the base frame 9 adjacent the rear cross member 12. A forwardly extending arm, only a portion 8 of which is illustrated in Fig. 3, extends forwardly from the arch frame 14 for hitching the bale wrapper 1 to a suitable towing vehicle, typically, a tractor. When hitched to a tractor, the bale wrapper 1 is trailed in a forward direction in the direction of the arrow A. The main framework 5 defines a pre-wrapping location 20 in which a bale 2 to be wrapped is located prior to wrapping.

A main support means, in this embodiment of the invention provided by a conveying means, namely, a main conveyor 21 supports the bale 2 to be wrapped in the pre-wrapping location 20. The main conveyor 21 comprises a slatted conveyor 22 which extends from a front 23 of the main framework 5 to a rear 24 of the main framework 5 for conveying the bale 2 to be wrapped from the front 23 to the pre-wrapping location 20 and in turn for conveying a wrapped bale 2 from the pre-wrapping location 20 to the rear 24 of the main framework 5 for dispensing a wrapped bale 2 from the bale wrapper 1, as will be described below. The slatted conveyor 22 is mounted on the base frame 9 and is driven by an hydraulic motor (not shown). A leading end conveyor 25 is mounted on the base frame 9 and extends forwardly from the main framework 5 for picking up the bale 2 on the ground as the bale wrapper 1 is being towed forwardly in the direction of the arrow A. The leading end conveyor 25 transfers the picked up bale 2 onto the main conveyor 21. The leading end conveyor 25 comprises a plurality of toothed endless chains 26 for engaging and picking up the bales 2 from the ground. An hydraulic motor (also not shown) drives the toothed endless chains 26 of the leading end conveyor 25. A pivot mounting (not shown) pivotally mounts the leading end conveyor 25 to the base frame 9 so that the leading end conveyor 25 is raisable and lowerable relative to the ground for facilitating towing of the vehicle when a bale is not to be engaged and picked up. A dispensing roller 27 is freely rotatably mounted on the base frame 9 at the rear 24 thereof from which the wrapped bale 2 is dispensed to the ground.

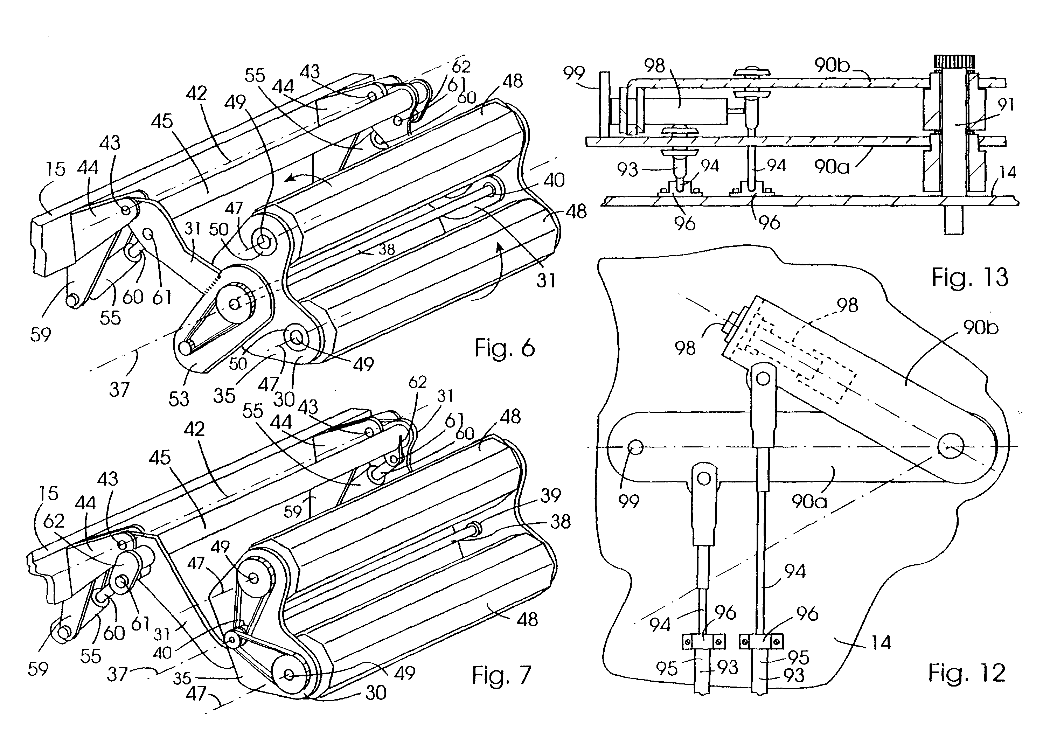

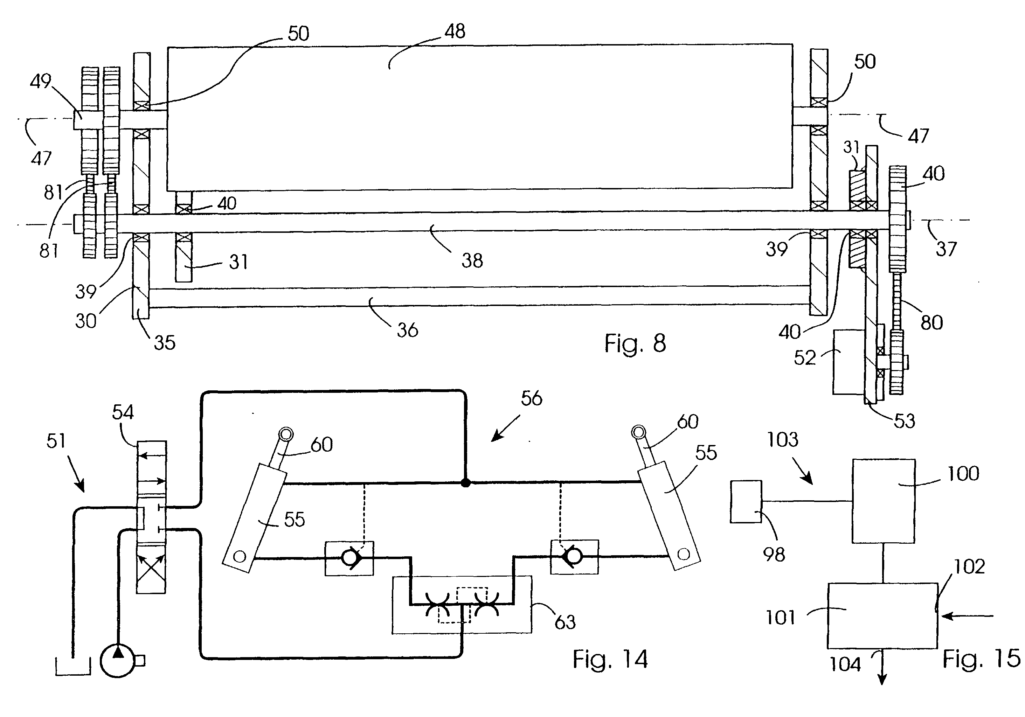

A pair of secondary support means, namely, secondary support units 30a and 30b are carried on corresponding carrier means, namely, two pairs of carrier arms 31 of steel for supporting the bale 2 in a bale wrapping location 33, and for rotating the bale in the bale wrapping location 33 about a first main axis, namely, a horizontal main axis 32 during wrapping of the bale 2 as will be described below. Each secondary support unit 30 comprises a pair of spaced apart support members, namely, support plates 35 of steel rigidly joined and connected together by a pair of elongated parallel tubular steel connecting members 36, see in particular Figs. 6, 7 and 8. The secondary support units 30 are pivotally connected to their corresponding carrier arms 31 about corresponding first pivot axes 37 which are defined by respective elongated drive shafts 38 which are rotatably carried in bearings 39 in the respective support plates 35 and in bearings 40 in the corresponding carrier arms 31. The pairs of carrier arms 31 are pivotally connected to the main framework 5 about respective second pivot axes 42 by pivot pins 43 which are carried on mounting brackets 44 on the upper side member 15 of the main framework 5. A connecting member 45 of tubular steel rigidly connects the two carrier arms 31 of each pair of carrier arms 31 so that the carrier arms 31 of each pair pivot together about the corresponding second pivot axis 42.

A pair of support rollers 48 are rotatably carried in each secondary support unit 30 for engaging, supporting and rotating the bale 2 in the bale wrapping location as will be described below. Each support roller 48 is rigidly carried on a shaft 49 which is rotatably carried in bearings 50 in the respective support plates 35 and which defines a rotational axis 47 of the support roller 48. A pair of first drive means, namely, first hydraulic drive motors 52 which are carried on carrier plates 53, which are rigidly carried on the forward of the two carrier arms 31 of each pair of carrier arms 31 drives the support rollers 48 of the respective secondary support units in the direction of the arrows B as will be described below for rotating the bale 2 in the bale wrapping location during wrapping. The first and second pivot axes 37 and 42, as well as the rotational axes 47 of the support rollers 48 are all parallel to each other, and parallel to the horizontal main axis 32. Thus, all the axes 37,42,47 and 32 extend in a generally longitudinal direction relative to the bale wrapper 1 from the front 23 to the rear 24.

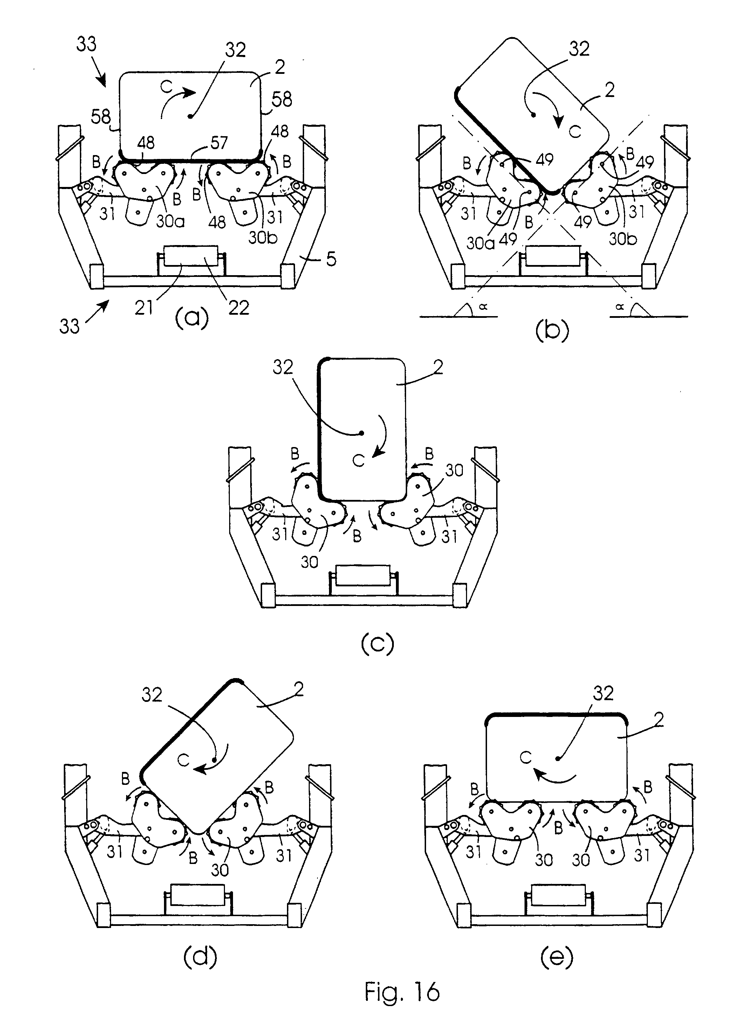

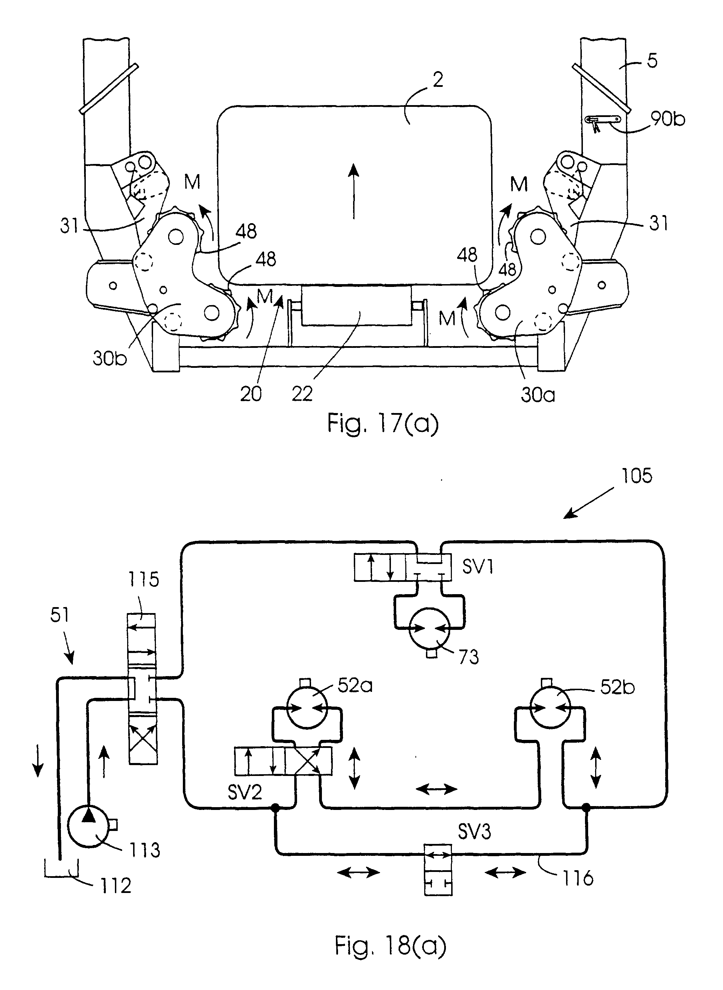

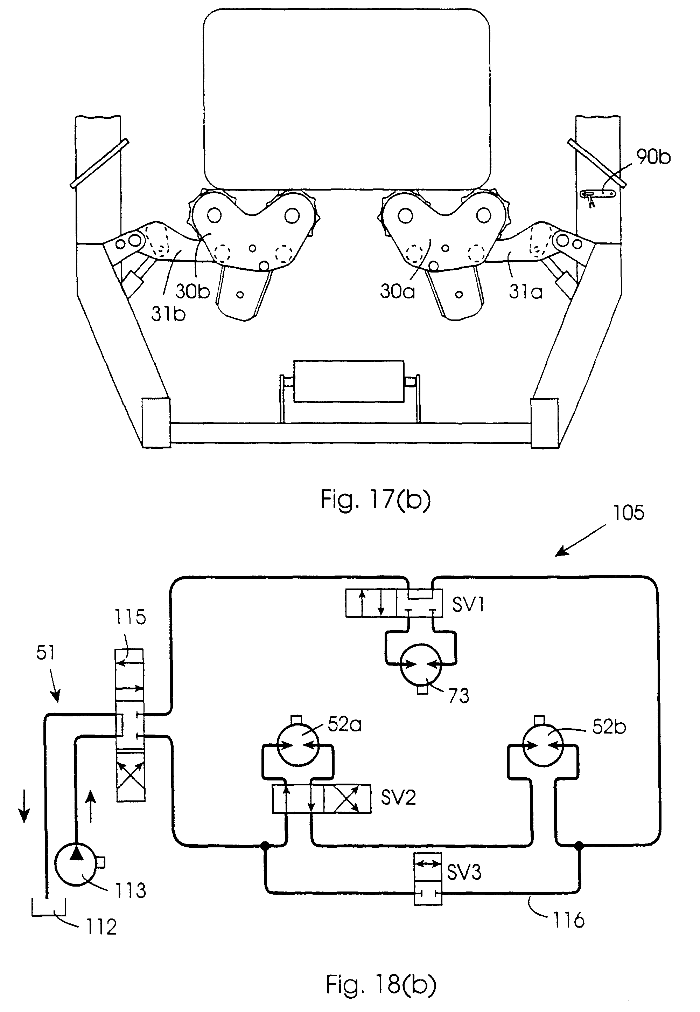

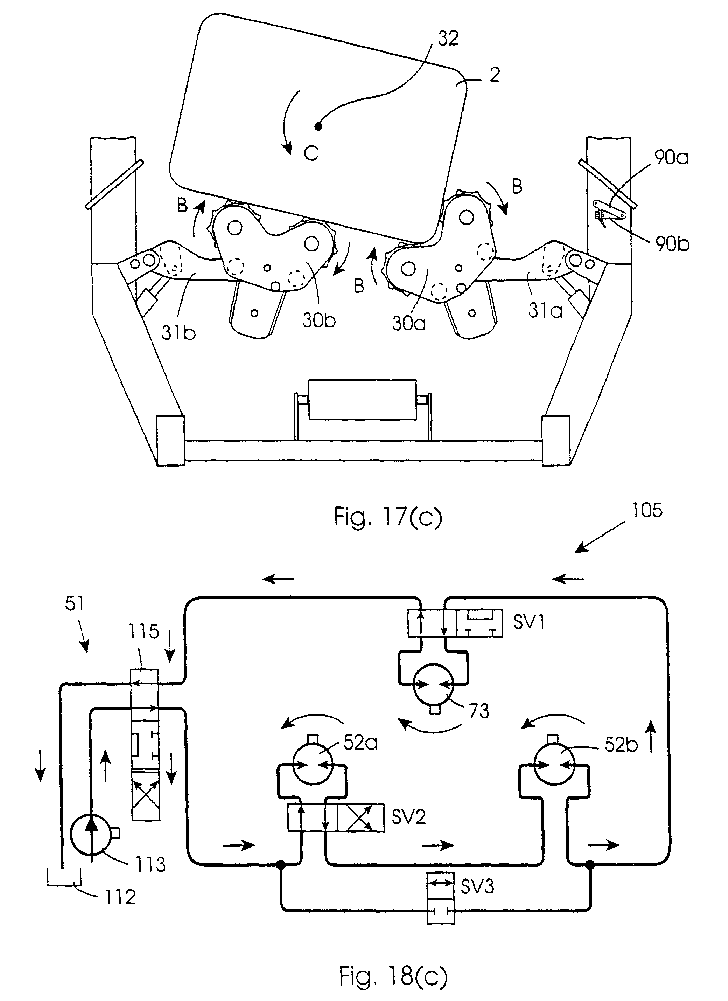

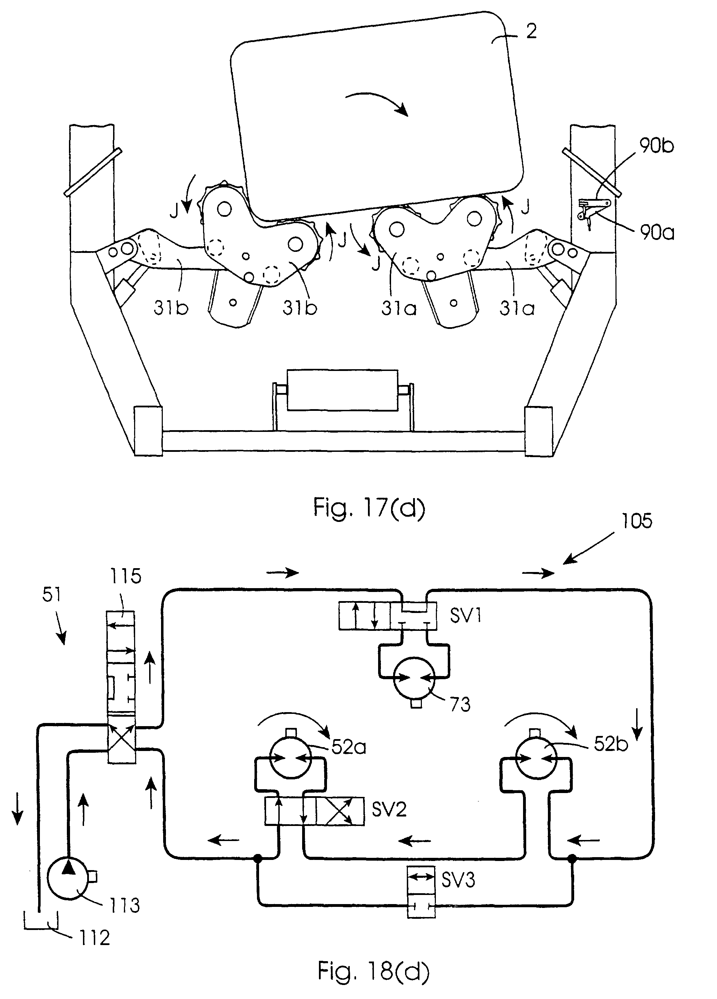

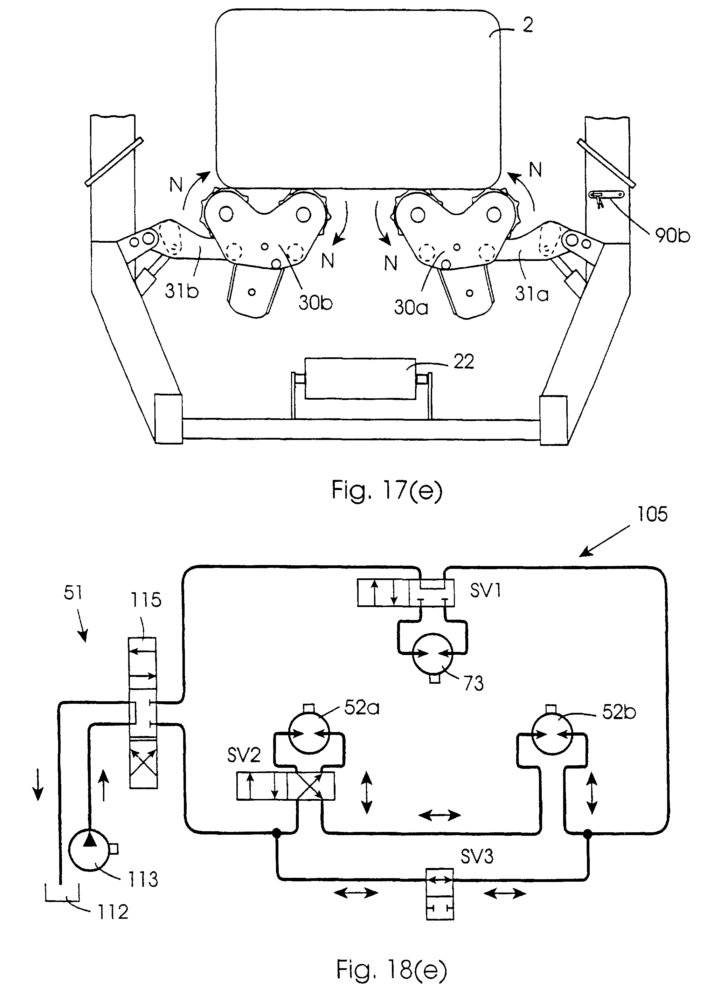

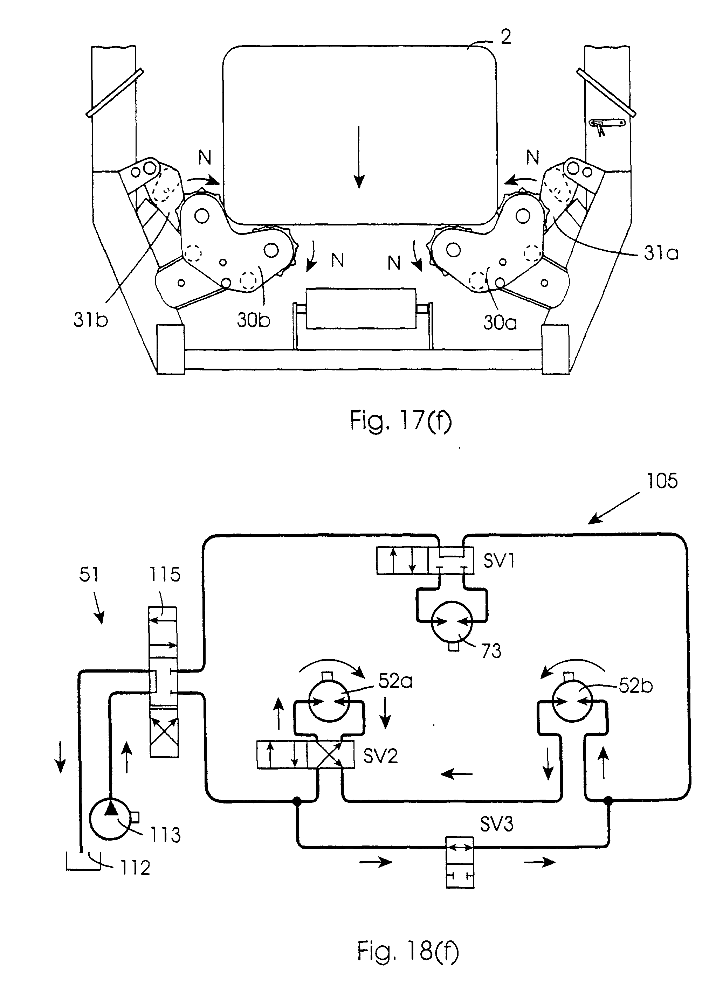

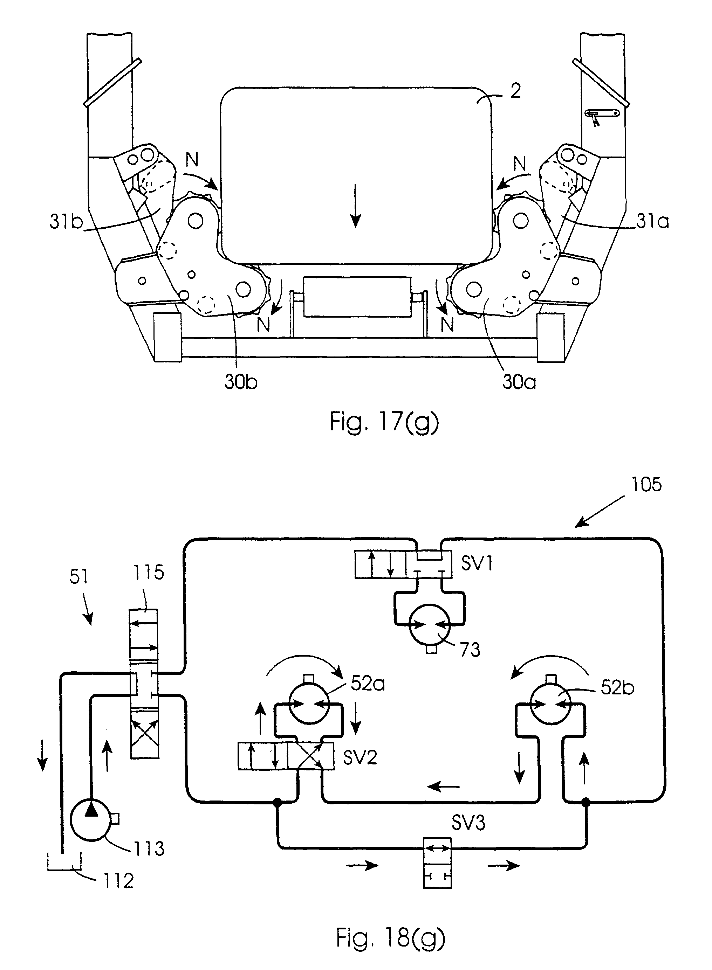

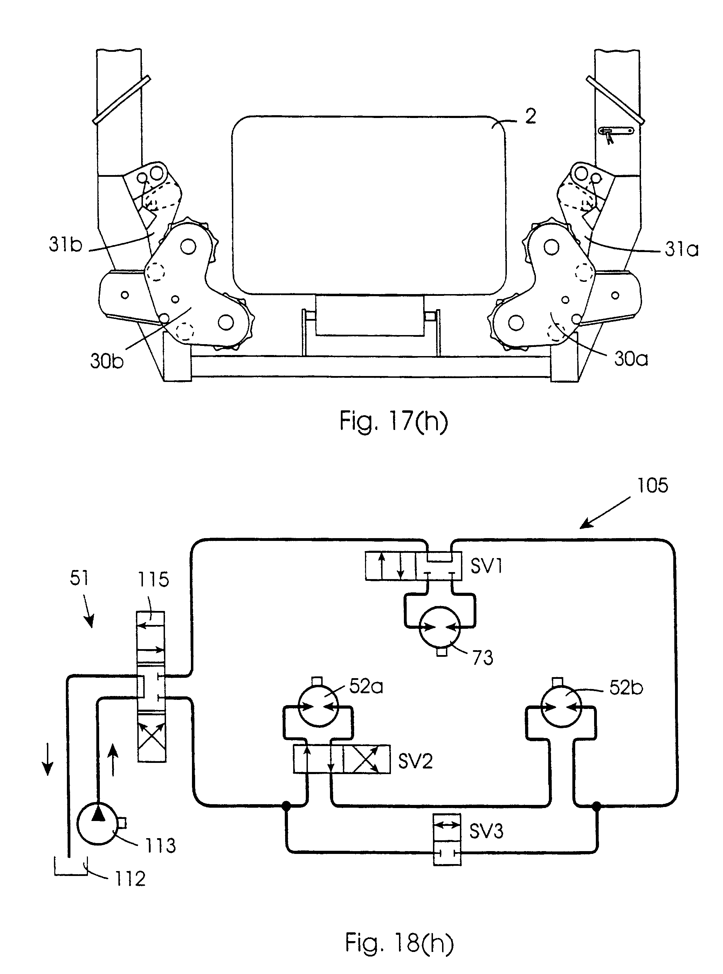

An urging means comprising a pair of urging rams, namely, double acting hydraulic rams 55 are provided for each pair of carrier arms 31 for pivoting the corresponding pair of carrier arms 31 from a first position with the corresponding secondary support units 30 disposed in an inoperative position illustrated in Fig. 17(a) disposed on respective opposite sides of the main conveyor 21 to a second position with the respective secondary support units 30 in an operative position illustrated in Fig. 17(b) supporting the bale 2 in the bale wrapping location 33. The hydraulic rams 55 are pivotally carried on mounting brackets 59 on the upper side members 15. Piston rods 60 of the hydraulic rams 55 are pivotally connected by pivot pins 61 carried between the carrier arms 31 and corresponding carrier brackets 62 which extend from the connecting member 45. The urging rams 55 are supplied with hydraulic fluid from a main pressurised hydraulic fluid supply circuit 51, see Fig. 14 which is described in more detail below. A solenoid operated control valve 54 connected to the supply circuit 51 controls the operation of the rams 55 through a balancing circuit 56. The balancing circuit 56 comprises a balancing valve 63, which balances the volume of hydraulic fluid being supplied to each of the four urging rams 55, so that the two pairs of carrier arms 31 move in registration, in other words, in unison or tandem with each other. In this way, the angles which the carrier arms 31 of the respective secondary support units 30 make with the horizontal is always identical, but of opposite hand as the carrier arms 31 are being pivoted between the first and second positions.

The secondary support units 30 and their corresponding carrier arms 31 as will be described below are arranged so that as the carrier arms 31 pivot from the first position towards the second position the secondary support units 30 engage the bale 2 on the main conveyor 21 on opposite sides thereof with the lower of the two support rollers 48 engaging an underside 57 of the bale 2 and the upper of the two support rollers 48 engaging opposite upstanding sides 58 of the bale 2. The secondary support units 30 and the carrier arms 31 are also arranged as will be described below for maintaining the bale 2 with its underside 57 lying in a horizontal plane as the bale is being raised and lowered between the pre-wrapping location 20 on the main conveyor 21 and the bale wrapping location 33.

An upper support member 65 extending from the arch frame 14 carries a pair of film carriers 66 on a carrier beam 67. The film carriers 66 carry respective rolls 70 of the wrapping film 3 for dispensing to the bale 2 during wrapping. The carrier beam 67 is rotatably carried on the upper support member 65 on a drive shaft 68 which extends rigidly upwardly from the carrier beam 67 and is rotatably carried in bearings (not shown) on the upper support member 65. The drive shaft 68 defines a second main axis, namely, a vertical main axis 69 about which the film carriers 66 are revolved by the carrier beam 67 as the carrier beam 67 rotates. The film carriers 66 are carried by the carrier beam 67 at spaced apart intervals of 180° around the vertical main axis 69. While not illustrated in detail, the construction of such film carriers 66 will be well known to those skilled in the art, and typically, are of the type which comprise a pair of tensioning rollers about which the wrapping film 3 is passed from the roll for tensioning the film for in turn tightly wrapping the film 3 onto the bale 2. A second drive means comprising a second hydraulic drive motor 73 is mounted on the upper support member 65 and drives the drive shaft 68 though a chain/sprocket drive transmission 74, for revolving the film carriers 66 around the vertical main axis 69 in the direction of the arrows D simultaneously while the bale 2 is being rotated in the bale wrapping location 33 about the horizontal main axis 32 by the support rollers 48 during a wrapping cycle.

A pair of cut and hold mechanisms 75 are carried on the upper side members 15 of the main framework 5 for cutting and parting the wrapping film 3 which is wrapped onto the bale 2 from the respective rolls 70 on the film carriers 66. The cut and hold mechanisms 75 also hold the free ends of the wrapping film 3 which extend from the rolls 70 after the film has been cut, so that when the film carriers 66 commence to revolve around the next bale 2 in the bale wrapping location 33 to be wrapped the wrapping film 3 is engaged onto the bale 2. The cut and hold mechanisms 75 hold the free ends of the wrapping film 3 until each film carrier 66 has revolved through more than one full revolution of 360° around the bale wrapping location 33 for holding the wrapping film 3 until the wrapping film 3 is secured to the bale 2. Thereafter the cut and hold mechanisms release the free ends of the wrapping film 3. Such cut and hold mechanisms 75 will be well known to those skilled in the art, and it is not intended to describe the cut and hold mechanisms 75 in further detail.

A pair of pull down members 77 of the cut and hold mechanisms 75 are provided for pulling down and gathering the wrapping film 3 and offering the gathered wrapping film 3 to a cutting mechanism (not shown) of the cut and hold mechanisms 75, and for holding the gathered film 3 in the cut and hold mechanisms 75. Each pull down member 77 terminates in its upper end in a top engagement plate 78 for engaging and gathering the wrapping film 3 as the pull down members 77 are being urged downwardly. The pull down members 77 are slidably carried in mounting sleeves 79 which are mounted on the upper side members 15 of the main framework 5. Hydraulic rams (not shown) mounted within the sleeves 79 raise and lower the pull down members 77. The pull down members 77 are located within a circle described by the locus of the film carriers 66 as the film carriers 66 revolve about the vertical main axis 69 so that when the pull down members 77 are extended upwardly towards the end of a wrapping cycle, the wrapping film 3 engages the pull down members 77. As soon as the wrapping cycle has been completed, the pull down members 77 are pulled down by the rams (not shown) so that the top engagement plates 78 gather the wrapping film 3 and present the gathered wrapping film 3 to the cut and hold mechanisms 75.

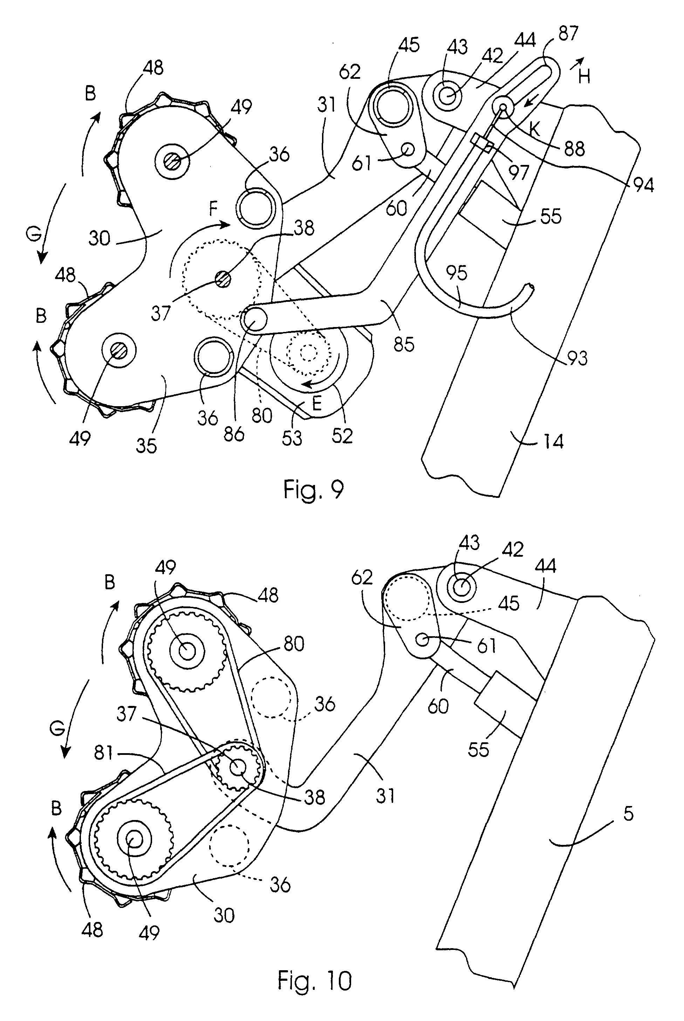

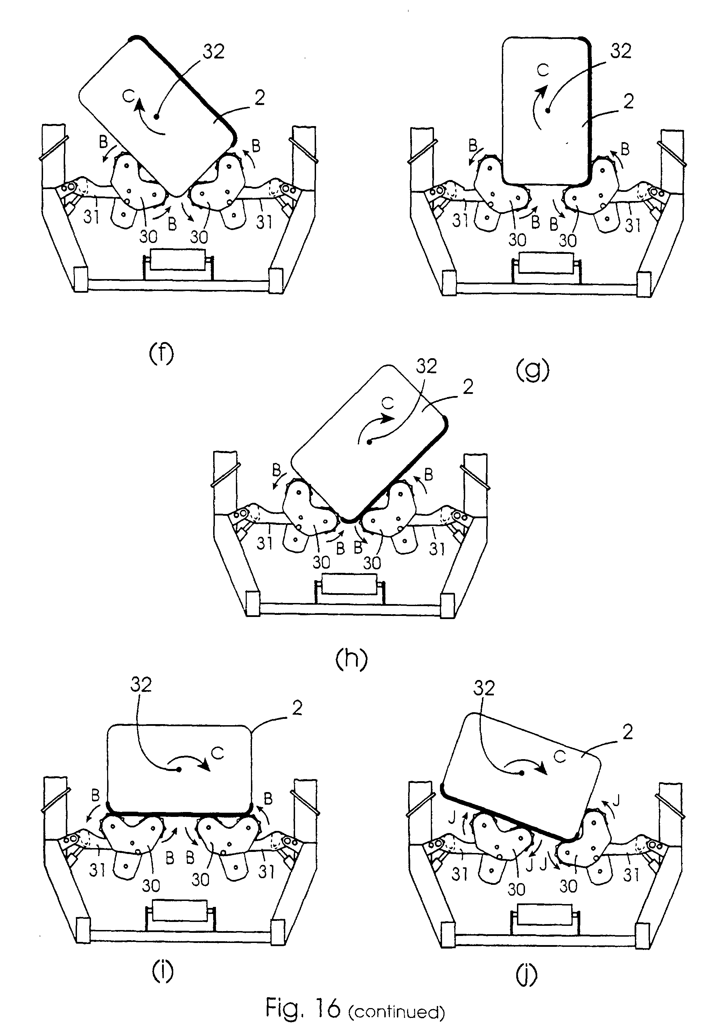

Returning now to the secondary support units 30, the first drive motor 52, of each secondary support unit 30, drives the corresponding main drive shaft 38 through a chain/sprocket drive transmission 80, see in particular Figs. 6 to 10. The support rollers 48 of each secondary support unit 30 are driven by the corresponding main drive shaft 38 through respective chain/sprocket drive transmissions 81. For convenience the chain/sprocket drive transmissions 81 for driving the support rollers 48 from the respective main drive shafts 38 are located on the support plates 35 of the respective secondary support units 30 which are located to the rear 24 of the bale wrapper 1. The chain/sprocket drive transmissions 80 are located on the secondary support units 30 to the front 23 of the bale wrapper 1. The support rollers 48 are rotated in the direction of the arrows B for rotating the bale 2 during wrapping in the direction of the arrow C, see Figs. 16 and 17. This requires the first drive motors 52 to rotate in the direction of the arrow E, which in turn drives the chain of the chain/sprocket drives 80 in the direction of the arrow F of each support unit 30, see Figs. 9 and 10. The main drive shafts 38 are thus also rotated in the direction of the arrows F. Since drive from the first drive motors 52 is transmitted through the support rollers 48 through the first pivot axes 37, and since the direction of rotation of the chain/sprocket drive transmissions 80 is in the direction of the arrow F, the action of the bale 2 as it is being rotated on the support units 30 which would tend to rotate the support units 30 in the direction of the arrow G about the first pivot axes 37 is partly counter-balanced by the direction of drive imparted by the chain/sprocket drive transmissions 80 onto the main drive shafts 38, see in particular Figs. 9 and 10.

A limit means for limiting pivotal movement of the secondary support units 30 relative to their corresponding carrier arms 31, and in turn relative to the main framework 5 comprises a pair of limit arms 85, one being provided for each secondary support unit 30, see Figs. 9, 11 and 19, which are the only Figs. in which the limit arms 85 are illustrated. One end of each limit arm 85 is pivotally connected to the support plate 35 at the front of the corresponding support unit 30 by a pivot pin 86 which is offset from the first pivot axis 37 of that secondary support unit 30. The other end of each limit arm 85 is provided with an elongated slot 87 which slidably engages a stop pin 88 which is carried on the forward mounting bracket 44 for limiting movement of the limit arm 85 in the direction of the arrows H and K relative to the stop pin 88, for in turn limiting pivotal movement of the corresponding secondary support unit 30 relative to the main framework 5.

A detecting means for detecting the angles of orientation of the respective secondary support units 30 relative to the main framework 5 comprises a pair of elongated detector members 90*a* and 90*b* which are pivotally connected together by a pivot pin 91 which defines a common pivot axis of the detector members 90*a* and 90*b*, see Figs. 9 to 13. The pivot pin 91 is mounted on the arch frame 14. The detector members 90*a* and 90*b* are connected by Bowden cables 93 to their corresponding secondary support units 30*a* and 30*b*, respectively.

One end of the inner cables 94 of the respective Bowden cables 93 is connected to the corresponding detector member 90, and one end of the outer sleeve 95 of each Bowden cable 93 is secured by a clamping bracket 96 to the arch frame 14. The other ends of the inner cables 94 of the Bowden cables 93 are connected to the corresponding stop pin 88 associated with the corresponding secondary support unit 30, and the other end of the outer sleeve 95 is clamped by a clamping bracket 97 to the limit arm 85 of the corresponding secondary support unit 30.

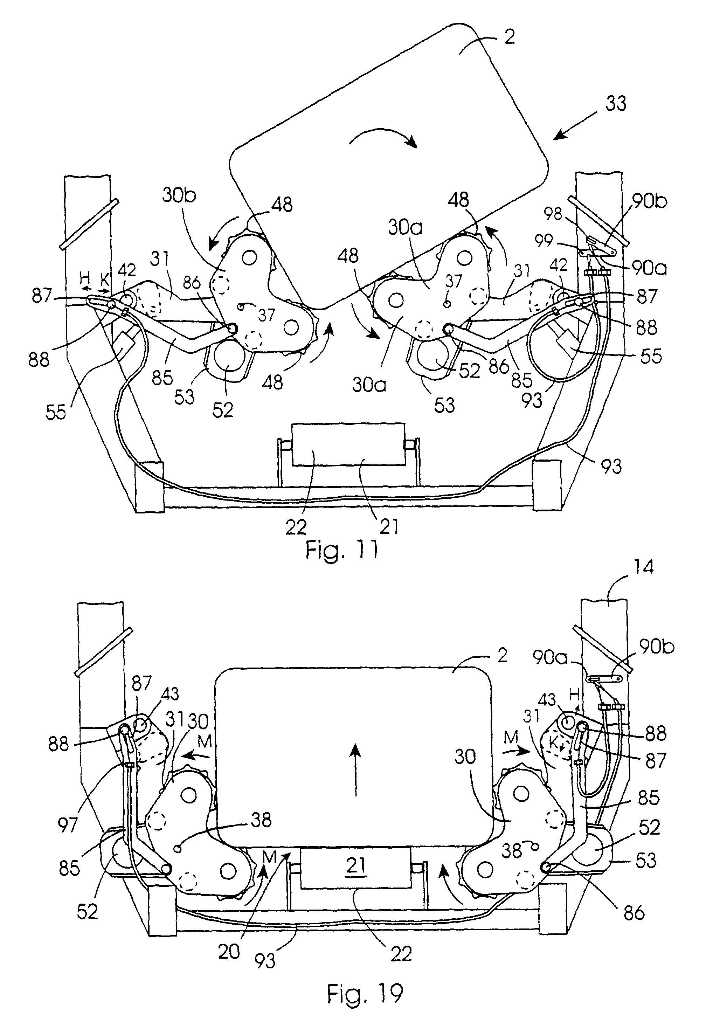

Accordingly, as the angles of orientation of the respective secondary support units 30 alter relative to the main framework 5 the Bowden cables 93 pivot the corresponding detector members 90 about the pivot pin 91. The detector members 90 and the Bowden cables 93 are arranged so that when the angles of orientation of the secondary support units 30 about their corresponding first pivot axes 37 relative to the main framework 5 are the same but of opposite hand the detector members 90 coincide with each other as illustrated in Figs. 13, 17(a), (b) and (e) to (h), and 19, otherwise the detector members 90 do not coincide, see Figs. 11 and 17(c) and (d).

Any datum may be selected for determining the angles of orientation of the respective secondary support units 30 about their respective first pivot axes 37 relative to the main framework 5. A convenient datum is a horizontal plane, for example, the ground. For the purpose of the description of the bale wrapper 1, the angle of orientation of each secondary support unit 30 about its first pivot axis 37 relative to the framework 5 is the angle which a plane contained by the rotational axes 47 of the two support rollers 48 of that secondary support unit 30 makes with the horizontal plane. This is the angle α which is shown in Fig. 16(b).

During each 360° of rotation of the bale 2 about the horizontal main axis 32 in the bale wrapping location 33 the angles of orientation of the respective secondary support units about their corresponding first pivot axes 37 relative to the main framework will only be similar and of opposite hand on eight occasions, in other words, for each 45° of rotation of the bale 2 about the horizontal main axis 32. That is provided that rotation of the bale 2 commences with an underside 15 of the bale lying in a horizontal plane. Fig. 16(a) to (j) shows the eight occasions during 360° of rotation of the bale 2 about the horizontal main axis 32 in which the angles of orientation of the respective secondary support units 30 about their first pivot axes 37 relative to the framework 5 are similar but of opposite hand when the rotation of the bale 2 commences with the underside 57 of the bale 2 horizontal. For ease of understanding Figs. 16(a) to (j) the side of the bale 2 which was the underside 57 of the bale 2 in Fig. 16(a) is illustrated by a heavy line in Figs. 16(b) to (j). In Fig. 16(b) the bale 2 is illustrated having been rotated through 45°, while in Fig. 16(c) the bale has been rotated through 90° and in Fig. 16(d) the bale has been rotated through 135° and so on to Fig. 16(i) where the bale has been rotated through a full 360°. For all other orientations of the bale 2 around the horizontal main axis 32 the angles α of orientation of the respective secondary support units 30 about their first pivot axes 37 relative to the main framework 5 will be different to each other, and the detector members 90 will not coincide with each other, see Fig. 11.

A sensing means for sensing when the detector members 90 coincide with each other comprises a proximity sensor 98 which is mounted on the detector member 90*b*. A reference means, namely, a reference member 99 extends from the detector member 90*a*, and is sensed by the proximity sensor 98 when the respective detector members 90*a* and 90*b* are in positions which coincide with each other as illustrated in Figs. 13 and 19. For all other angles of orientation of the secondary support units 30 the detector members 90*a* and 90*b* do not coincide. The proximity sensor 98 outputs a signal each time it senses the reference member 99.

Accordingly, by counting the number of times the proximity sensor 98 senses the reference member 99 the angle through which the bale 2 has been rotated about the horizontal main axis 32 can readily easily be determined. Eight signals from the proximity sensor 98 indicates that the bale has been rotated through 360° from an original position with the underside 57 of the bale 2 lying in a horizontal plane. Thus, in this embodiment of the invention the wrapping cycle is determined when a counter 100, see Fig. 15, counts a predetermined number of signals from the proximity sensor 38. An electronic control circuit 103 in which the counter 100 is located is described below. If one rotation of the bale through 360° is sufficient for wrapping, and in general, with the two film carriers 66 one rotation through 360° is sufficient, a wrapping cycle is determined as having been completed when the counter 100 counts eight signals. Should one and a half rotations of the bale 2 be required, in other words, a rotation of the bale through 540°, wrapping is completed when the counter 100 has counted 12 signals. This is a particularly convenient way of determining when a wrapping cycle has been completed, and additionally, it permits ready easy alteration of the wrapping cycle by merely inputting into the electronic control circuit 103 the number of counts that are to be counted by the counter 100 during a wrapping cycle.

Referring now to Fig. 15. the electronic control circuit 103 for monitoring the proximity sensor 98 is illustrated in block representation. Signals generated by the proximity sensor 98 each time the proximity sensor senses the reference member 99 are relayed to the counter 100. The count of the number of signals is outputted from the counter 100 in a microprocessor 101. An input port 102 is provided in the microprocessor 101 for permitting the desired number of signals for a wrapping cycle to be entered and stored in the microprocessor 101. The microprocessor 101 reads the count of the number of signals received from the counter 100 and compares the count with the stored number of signals which has been entered through the input port 102. When the count outputted by the counter 100 has reached the stored count, the microprocessor 101 outputs a signal on an output port 104 which controls an hydraulic control circuit 105 for controlling the operation of the first and second drive motors 52 and 73 for terminating the wrapping cycle. The hydraulic control circuit 105 is described in detail below.

It will of course be appreciated that if the bale being wrapped were of square cross-section, as opposed to rectangular cross-section as illustrated in Figs. 16(a) to 16(j), or of dimensions such that when oriented as illustrated in Figs. 16(c) and 16(g) the underside surface of the bale rested on all four support rollers 48, then in the orientations illustrated in Figs. 16(c) and 16(g), the angles of orientation of the secondary support units 30 about the first horizontal pivot axis 37 would be such that the rotational axes 47 of the support rollers 48 would lie in a common horizontal plane. Additionally, if the dimensions of the bale 2 were such that each time the underside of the bale was horizontal the underside of the bale only contacted the lower support rollers of each secondary support unit 30, then for the positions of such a bale corresponding to the positions of Figs. 16(a) to 16(i), the angles of orientation of the secondary support units 30 about the first pivot axes 37 would be such that in these positions the rotational axes 47 of the support rollers 48 would lie in planes probably at 45° to the horizontal. But irrespective of the value of the angle α, the angles α which the planes containing the rotational axes 47 of the support rollers 48 of the respective secondary support units 30 make with the horizontal plane would be similar but of opposite hand, for the positions of the bale illustrated in Figs. 16(a) to 16(i). Thus, irrespective of the size or shape of a parallelepiped bale, by counting the signals from the proximity sensor 98, a determination of the completion of a wrapping cycle can be made.

The proximity sensor 38 and the counter 100 are also used for determining when the underside 15 of a wrapped bale 2 is horizontal after a wrapping cycle. This is achieved by reading the output of the proximity sensor 98 to ascertain if it is aligned with the reference member 99 after the counter 100 has counted the appropriate number of signals corresponding to increments of 90° or 180° of rotation of the bale depending on the shape of the bale. The proximity sensor 98 is arranged so that for so long as the proximity sensor 98 is aligned with the reference member 99, the proximity sensor 98 outputs a signal. Otherwise, the output from the proximity sensor 98 is low. Thus, if at the end of a wrapping cycle the support rollers 48 over rotate the bale beyond the desired angle of rotation, for example, as illustrated in Fig. 16(j), the respective first drive motors 52 of the secondary support units 30 are operated for rotating the support rollers 48 in the direction of the arrow J for in turn rotating the bale in reverse until the proximity sensor 98 indicates that the angles of orientation of the two secondary support units 30 about the first pivot axis 37 are similar but of opposite hand, in this case, with the rotational axes 47 of the support rollers 48 lying in a plane extending at +/- 180° to the horizontal, in other words, lying in a common horizontal plane.

Referring now to Figs. 18(a) to 18(h) the operation of the hydraulic circuit 105 will be described. The hydraulic control circuit 105 when operating in a first mode simultaneously powers the first drive motors 52 for rotating the support rollers 48 in the direction of the arrows B for in turn rotating the bale 2 in the bale wrapping location 33 about the horizontal main axis 32 in the direction of the arrow C, and for powering the second drive motor 73 for revolving the film carriers 66 about the vertical main axis 69 in the direction of the arrows D, during a wrapping cycle for wrapping the bale 2 with the wrapping film 3. Hydraulic fluid is supplied to the hydraulic control circuit 105 from the supply circuit 51 through a main solenoid controlled hydraulic valve 115 in the circuit 105. The circuit 105 is operable in the first mode with the two first drive motors 52 and the second drive motor 73 connected in series, so that the respective drive motors 52 and 73 operate simultaneously for rotating the support rollers 48 and the carrier beam 67 simultaneously in a wrapping cycle. The series connection of the three drive motors 52 and 73 also ensures that the speed of the two first drive motors 52 are identical, and the speed of the second drive motor 73 can be maintained as a function of the speed of the first drive motors 52 for providing adequate wrapping and overlapping of the wrapping film 3 on the bale 2. A first solenoid controlled hydraulic valve SV1 selectively connects the second drive motor 73 into the circuit 105 for facilitating isolation of the second drive motor 73 from the hydraulic circuit 105 as will be discussed below.

A second solenoid controlled hydraulic valve SV2 connects one of the first drive motors 52, namely, the first drive motor 52*a* of the secondary support unit 30*a* into the circuit 105 for facilitating selective reversal of the direction of drive of the first drive motor 52*a* relative to the first drive motor 52*b* of the secondary support unit 30. A third solenoid controlled hydraulic valve SV3 is located in a connecting circuit 116 for selectively connecting the first hydraulic motors 52*a* and 52*b* in parallel with each other when the second hydraulic motor 73 is isolated from the circuit 105, and when the circuit 105 is isolated from the hydraulic supply circuit 51 by the main hydraulic valve 115. By operating the second valve SV2 to reverse the rotational sense of the first drive motor 52*a* relative to the rotational sense of the first drive motor 52*b*, and by operating the third valve SV3 to connect the first drive motors 52 in parallel, and with the first drive motors 52 isolated from the rest of the circuit 105, the circuit 105 can be selectively operated in a second mode during raising and lowering of the bale between the bale wrapping location 33 and the main conveyor 21 for maintaining the underside 57 of the bale 2 in a horizontal plane. In the second mode of operation since the first drive motors 52 are connected to rotate in respective opposite senses, two important advantages of the invention are achieved. Firstly, the support rollers 48 of the respective support units 30 are free to rotate in respective opposite senses, namely, in the directions of the arrows M and N, see Fig. 19, and Figs. 18(a) and (e) to (g). In this way as the bale 2 is being raised or lowered between the bale wrapping location 33 and the main conveyor 21, the support rollers 48 are free to rotate relative to the surface of the bale 2, thereby avoiding damage to the bale 2 as the bale 2 is being raised to the bale wrapping location 33, and damage to the wrapping film on the bale 2 as the wrapped bale is being lowered from the bale wrapping location 33.

As the bale is being raised from the main conveyor 21 to the bale wrapping location 33, the support rollers 48 of the respective secondary support units 30 rotate in the directions of the arrows M, see Fig. 19 and Fig. 17(a). The support rollers 48 rotate in the reverse direction, namely, in the direction of the arrows N as the bale is being lowered from the bale wrapping location 33, see Figs. 17(e) to (g).

The second advantage achieved by providing for operation of the hydraulic control circuit 105 in the second mode is that in the second mode the respective first drive motors 52 being connected to rotate in opposite senses relative to each other allows either one of the first drive motors 52 to act as a pump to drive the other of the two first drive motors 52 in the opposite sense. Thus, during raising or lowering of the bale, should the bale 2 commence to rotate from its orientation with its underside 57 horizontal, any such rotation is corrected. As the bale 2 commences to rotate about the horizontal main axis 32 from its horizontal orientation, the commencement of such rotation of the bale 2 causes the support rollers 48 of one of the secondary support units 30 to rotate faster than the support rollers 48 of the other secondary support unit 30. This, thus, causes the first drive motor 52 of that secondary support unit 30 with the faster rotating support rollers 48 to act as a pump, thereby pumping hydraulic fluid to the first drive motor 52 of the other secondary support unit 30, which thus causes the support rollers 48 of that other secondary support unit 30 to commence to rotate faster, thereby returning the bale to its horizontal orientation.

Suitable electronic control circuitry which is not illustrated, and which interfaces with the microprocessor 101, and is controlled by the microprocessor 101, is provided for controlling the operation of the main hydraulic valve 115 and the first, second and third valves SV1, SV2 and SV3. Additionally, the control valve 54 and the balancing circuit 56 for controlling the operation of the hydraulic rams 55 are also operated under the control of the microprocessor 101 of the control circuit 103, as are the rams (not shown) of the pull down members 77 of the cut and hold mechanisms 75.

The hydraulic fluid supply circuit 51 comprises a reservoir 112 for hydraulic fluid and an hydraulic pump 113 which are housed as an hydraulic power pack (not shown). The power pack (not shown) is mounted on the towing arm 8 in a convenient location so that the pump 113 can be powered by the power-take-off shaft of the tractor for supplying the pressurised hydraulic fluid supply.

A pair of bale sensing arms 117 are located on opposite sides of the slatted conveyor 22 for detecting when a bale has been conveyed by the slatted conveyor 22 into the pre-wrapping location 20. The bale sensing arms 117 are pivotally connected to the base frame 9, and are depressed downwardly by a bale 2 being conveyed to the pre-wrapping location 20. On the bale 2 reaching the pre-wrapping location, the sensing arms 117 are released and pivot upwardly indicating that the bale is in the pre-wrapping location 20. Appropriate electrical sensors (not shown) are connected to the sensing arms 117 for detecting the orientation of the sensing arms 117. The sensors (not shown) are connected into the electronic control circuitry (not shown) for reading thereof for indicating the presence of a bale in the pre-wrapping location 20.

In use, the bale wrapper 1 is hitched to a towing vehicle, such as a tractor, and the hydraulic pump 113 of the power pack (not shown) is connected to the power-take-off shaft of the tractor. An electrical power supply is also taken from the tractor for powering the electronic control circuit 103 and other electronic and electrical circuitry (not shown) of the bale wrapper. The bale wrapper 1 is now ready for use. The bale wrapper 1 with the carrier arms 31 in the first position, and in turn the secondary support units 30 in the inoperative position, and the leading end conveyor 25 lowered, is towed in the forward direction of the arrow A by the tractor. On the leading end conveyor 25 engaging a bale on the ground, the toothed endless chains 26 engage the bale and convey it onto the slatted conveyor 22. The slatted conveyor 22 conveys the bale into the pre-wrapping location 20.

When the sensing arms 117 have detected the bale 2 in the pre-wrapping location 20 the slatted conveyor 22 and the leading end conveyor 25 are stopped. The slatted conveyor 22 thus supports the bale in the pre-wrapping location 20. The hydraulic control circuit 105 is operated in the second mode, see Fig. 18(a). The hydraulic rams 55 are operated for pivoting the carrier arms 31 from the first position towards the second position for in turn urging the secondary support units 30 from the inoperative position for engaging the bale 2 in the pre-wrapping location. The secondary support units 30 engaged the bale 2 with the lower of the two support rollers 48 engaging the underside 57 of the bale, and the upper of the two support rollers 48 engaging opposite upwardly extending sides 58 of the bale 2. When engaging the bale 2 in the pre-wrapping location 20 the angle α of the respective secondary support units, in general, is approximately 45°, see Fig. 19. The rams 55 continue to pivot the carrier arms 31 with the bale 2 supported on the secondary support units 30 until the first carrier arms 31 are in the second position and the secondary support units 30 are in the operative position.

The pivoting of the carrier arms 31 from the first position to the second position is continuous, and by virtue of the fact that the rams 55 are connected through the balancing valve 63, the rate at which the carrier arms 31 are pivoted is identical so that the positions of the first pivot axes 37 of the respective secondary support units 30 will always be symmetrical about a longitudinal centre line of the bale wrapper 1. While the carrier arms 31 are being pivoted from the first to the second positions, after the secondary support units 30 have engaged the bale 2, the angles of orientation of the respective secondary support units 30 about the first pivot axes 37 relative to the main framework 5 alter, but their respective angles α are always similar, for maintaining the bale with its underside in a horizontal plane. When the secondary support units have reached the operative position with the bale 2 in the bale wrapping location, see Fig. 17(b) the secondary support units 30 have been oriented so that the rotational axes 47 of the support rollers 48 lie in a common horizontal plane. Needless to say, in the event of a relatively large bale, the underside of such a large bale may be engaged by the two support rollers 48 of each secondary support unit 30 almost immediately after the secondary support units 30 have engaged the bale in the pre-wrapping location 20.

During pivoting of the carrier arms 31 from the first to the second positions for urging the secondary support units 30 from the inoperative to the operative position, the hydraulic circuit 105 is operated in the second mode as illustrated in Fig. 18(a). In this mode the hydraulic circuit 105 is isolated by the main hydraulic valve 115 from the hydraulic fluid supply circuit 51. The second drive motor 73 is isolated from the circuit 105 by the first valve SV1 and the second and third valves SV2 and SV3 are connected so that the respective first drive motors 52 are connected in parallel and their respective senses of rotation are reversed. Thus, the support rollers of the respective secondary support units 30 are permitted to rotate in opposite directions, namely, in the directions of the arrows M to roll over the surface of the bale 2 as the bale 2 is being raised from the pre-wrapping location 20 to the bale wrapping location 33, for avoiding damage to the bale, see Fig. 19. Additionally, by virtue of the fact that the respective first drive motors 52 are connected in parallel avoids any danger of the orientation of the bale altering from that in which its underside 57 lies in a horizontal plane. Should there be any tendency for the underside of the bale 57 to move out of a horizontal plane, the action of the underside 57 on the support rollers 48 of either one of the secondary support units 30 causes the support rollers 48 of one of the secondary support units 30 to drive the first drive motor 52 of that secondary support unit 30, which then acts as a pump to pump hydraulic fluid to the other of the two first drive motors 52 for in turn driving the support rollers 48 corresponding to that first drive motor 52 to rotate faster in the direction of the arrows M for righting the orientation of the bale thereby returning the underside of the bale 2 into a horizontal plane.

When the bale 2 has been raised into the bale wrapping location 33 by the respective secondary support units 30, the rams 55 are locked in position for retaining the carrier arms 31 in the second position with the secondary support units 30 in their operative position, and the hydraulic control circuit 105 is operated in the first mode as illustrated in Fig. 18(c). The first valve SV1 is operated for connecting the second drive motor 73 into the circuit 105 and the second and third valves SV2 and SV3 are operated as illustrated in Fig. 18(c) for connecting the two first hydraulic motors 52 in series with each other and in series with the second hydraulic motor 73 and for isolating the connecting circuit 116. The main hydraulic valve 115 is operated for connecting the hydraulic circuit 105 to the supply circuit 51. This, thus, causes the first drive motors 52 to rotate the support rollers 48 in the direction of the arrows B for rotating the bale in the direction of the arrow C about the horizontal main axis 32, and for powering the second drive motor 73 for rotating the carrier beam 67 in the direction of the arrow D for revolving the film carriers 66 about the bale 2, thereby commencing the wrapping cycle. Thus, with the support rollers 48 rotating in the direction of the arrows B and the film carriers 66 being revolved about the bale 2 in the direction of the arrow D, wrapping of the bale is carried out in a wrapping cycle.

Initially, prior to the commencement of the wrapping cycle the free ends of the wrapping film 3 are held by the cut and hold mechanisms 75. This will have arisen as a result of the cut and hold mechanisms 75 holding the free ends of the wrapping film 3 from the end of a previous wrapping cycle. If the free ends of the wrapping film 3 are not held by the cut and hold mechanisms 75, in other words, if the bale being wrapped is the first bale to be wrapped, then an operator will be required to engage the free ends of the wrapping film 3 in the cut and hold mechanisms 75. Accordingly, by virtue of the fact that the free ends of the wrapping film 3 are held in the cut and hold mechanisms 75 as the film carrier 66 commenced to revolve around the bale 2 the wrapping film 3 is dispensed onto the bale, and after one complete revolution of 360° by each of the film carriers 66 the wrapping film 3 is secured to the bale. At that stage, the pull down members 77 are raised slightly for releasing the free ends of the wrapping film 3 from the cut and hold mechanisms 75, and wrapping of the bale continues. The free ends of the wrapping film 3 are over wrapped onto the bale by subsequent wraps of the wrapping film 3.

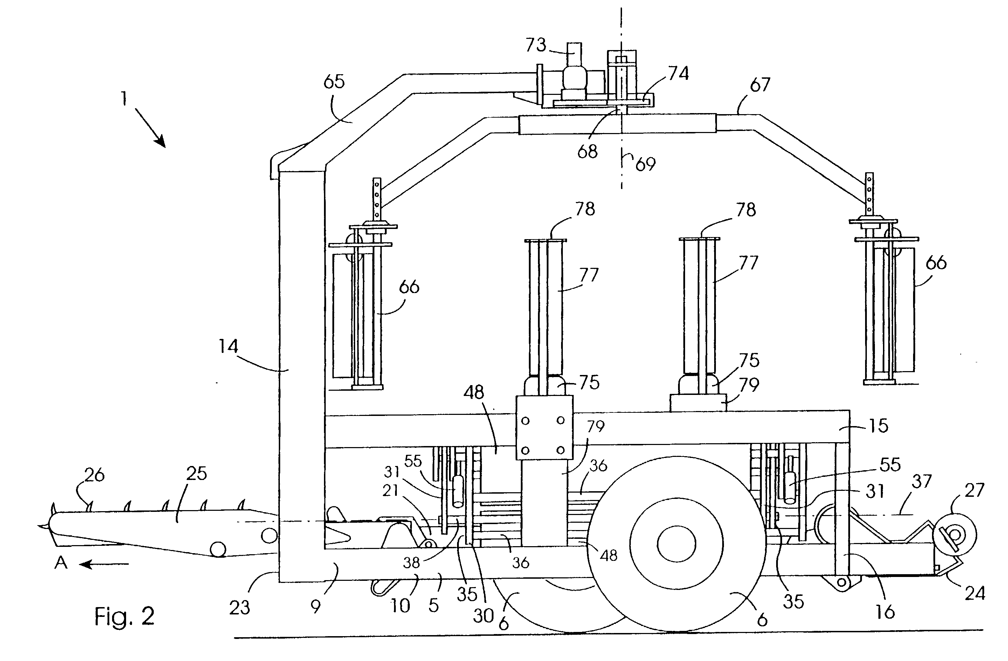

During the wrapping cycle the counter 100 counts the number of signals received from the proximity sensor 98 which are in turn fed to the microprocessor 101. When the number of signals counted by the counter 100 is equal to the desired count for the wrapping cycle the microprocessor 101 activates the electronic control circuitry (not shown) for commencement of the termination of the wrapping cycle. Just before the wrapping cycle terminates the hydraulic rams (not shown) raise the pull down members 77 of the cut and hold mechanisms 75 into the positions illustrated in Figs. 2 and 3. The carrier beam 67 continues to revolve the film carriers 66 so that the wrapping film 3 engages the pull down members 77. After the wrapping film 3 engages the pull down members 77, and the film carriers 66 have revolved past the pull down members, the main valve 115 is operated to isolate the hydraulic control circuit 105 from the main hydraulic supply circuit 51, thereby stopping the first and second drive motors 52 and 73. The hydraulic rams (not shown) are operated for lowering the pull down members 77, so that the top engagement plates 78 engage the top edges of the wrapping film 3 for gathering the wrapping film 3 and engaging it with the cut and hold mechanisms 75. The cut and hold mechanisms 75 are then operated for cutting and parting the wrapping film 3 on the bale from the wrapping film on the rolls 70, and the top engagement plates 78 clamp the free ends of the film from the rolls 70 in engagement with the cut and hold mechanisms 75 for holding the free ends of the wrapping film 3 for the next bale wrapping cycle.

The microprocessor 101 is programmed to terminate the wrapping cycle when the bale 2 is oriented with its underside 57 lying in a horizontal plane. Thus, a wrapping cycle can be terminated after the bale has been rotated through 360°, or any other increment of 180° thereafter. Indeed, in the event of a square bale, or a bale in which the vertical cross-section is substantially square the wrapping cycle may be terminated at 360° of rotation of the bale or increments of 90° thereafter. In that way, the bale will always be oriented with its underside in a horizontal plane. However, in general, there will be an overrun in the wrapping cycle, thus leading to the bale commencing a further rotation after its underside is horizontal, and typically, a wrapping cycle ends with the bale in an orientation illustrated in Fig. 15(j) and 17(d), in other words, with the underside of the bale lying between the horizontal and 45° to the horizontal. In order to orient the bale 2 with its underside 57 horizontal, the first valve SV1 is operated as illustrated in Fig. 18(d) for isolating the second drive motor 73 of the circuit 105, and the main hydraulic valve 115 is operated as illustrated in Fig. 18(d) for reversing the direction of hydraulic fluid flow through the circuit 105, for in turn reversing the first drive motors 52 for rotating the support rollers 48 in the reverse direction, namely, in the direction of the arrows J, see Fig. 17(d). The first drive motors 52 are operated in this mode until a signal is received from the proximity sensor 78 indicating that the underside 57 of the wrapped bale 2 is again horizontal. The main hydraulic valve 115 is operated for isolating the hydraulic control circuit 105 from the hydraulic fluid supply circuit 51 and the first valve SV1 remains in the mode for isolating the second hydraulic motor 73 from the hydraulic control circuit 105. The hydraulic circuit 105 is then operated in the second mode by operating the second and third valves SV2 and SV3 as illustrated in Fig. 18(e) to (g) for connecting the two first hydraulic motors 52 in parallel with each other through the connecting circuit 116 to rotate in opposite senses relative to each other. In this second operating mode the bale wrapper 1 is ready for lowering the wrapped bale 2 from the bale wrapping location 33 to the pre-wrapping location 20 onto the slatted conveyor 22. The control valve 54 is operated for in turn operating the four rams 55 for pivoting the carrier arms 31 downwardly from the second position to the first position for in turn returning the second support units 30 into the inoperative position and for returning the wrapped bale onto the slatted conveyor 22. During lowering of the bale operation of the support rollers 48 and the first drive motors 52 is similar to that already described during raising of the bale from the pre-wrapping location 20 to the bale wrapping location 33 with the exception that the support rollers 48 rotate in the reverse direction, namely, in the direction of the arrows N for rolling over the surface of the wrapped bale, see Figs. 18(e) to (g). Because the support rollers 48 roll over the wrapping film 3 on the bale 2 any danger of tearing, stretching, or any other damage to the wrapping film 3 is avoided. Additionally, by virtue of the fact that the support rollers 3 rotate and roll over the surface of the bale 2 no undue stresses are induced in the secondary support units 30, the carrier arms 31 and the main framework 5. Additionally, should the wrapped bale commence to rotate out of its horizontal orientation during lowering from the bale wrapping location, the support rollers 48 of one of the secondary support units 30 will commence to rotate faster than those of the other secondary support unit 30. The faster rotating rollers 48 will drive their corresponding first drive motor 52, thus causing it to act as a pump for pumping hydraulic fluid to the first drive motor 52 of the other secondary support unit 30. This, thus causes the first drive motor 52 of that other secondary support unit 30 to drive its corresponding support rollers 48 faster, thereby righting the orientation of the wrapped bale.

When the wrapped bale 2 has been lowered onto the slatted conveyor 22 in the pre-wrapping location 20, the slatted conveyor 22 is operated by its hydraulic motor (not shown) and the bale is dispensed over the dispensing roller 27 onto the ground. The next bale which will have already been picked up by the toothed endless chain 26 is transferred into the pre-wrapping location by the slatted conveyor 22 as the wrapped bale is being dispensed.

It will of course be appreciated that when rotating a bale of rectangular or square cross-section, the horizontal main axis may not remain in the same position, but will move as the bale is rotated. However, the horizontal main axis will always be parallel to the rotational axes of the support rollers.

The arc through which the respective carrier arms 31 are pivoted from the first to the second position for raising the respective secondary support units 30 from their inoperative to their operative positions depends on the size of the bale to be wrapped. For a relatively small size bale, the respective carrier arms 30 will be pivoted to lie substantially horizontally, so that the respective secondary support units 30 will be in their closest together position. In other words, the respective carrier arms 31 will be pivoted until the first pivot axes 37 and the second pivot axes 42 lie in a common horizontal plane. For larger bales, the arc through which the carrier arms 31 are pivoted from the first to the second position will be smaller. Indeed, for relatively large bales, it is envisaged that the respective carrier arms 31 will be pivoted to a second position wherein planes containing the respective first and second pivot axes 37 and 42 corresponding to the respective carrier arm 31 may incline downwardly from their respective second pivot axes 42 at an angle of as much as 30° to the horizontal, and even more. Although not described or illustrated, suitable electronic and hydraulic control circuitry and valves are provided for setting the length of the stroke of the rams 55 for pivoting the respective carrier arms 31 to the appropriate second position, depending on the bale size. Suitable means which is not shown is also provided for facilitating selection of the appropriate stroke length of the rams 55 by an operator.

While the detecting means for detecting when the orientation of the secondary support units about their corresponding first pivot axes relative to the framework has been described as comprising a pair of pivotally connected members having a sensing means mounted on one of the pivot members and a reference member mounted on the other of the pivot members, any other suitable detecting means may be used. For example, it is envisaged that instead of the pivotally connected members, a pair of slidable members may be mounted to slide parallel relative to each other, and the sensing means would be carried on one of the slidable members and the reference means on the other. Needless to say, other suitable detecting means may be provided.

While the bale wrapper according to the invention has been described for wrapping a single rectangular bale, in a wrapping cycle, it is envisaged in certain cases that the bale wrapper may be used for simultaneously wrapping a pair of rectangular bales together in a wrapping cycle, and in which case, it is envisaged that the bales would be arranged so that the combined vertical cross-section of the bales is approximately square. Typically, the bales would be arranged so that their combined dimensions would be length 1.6 Metres, width 1,2 Metres, and height 1.4 Metres. In other words, the dimensions of the vertical cross-section would be approximately 1.2 Metres by 1.4 Metres. Thus, the bales would be arranged with their height dimensions of 0.7 Metres summed together to give an overall height of 1.4 Metres. Additionally, it is envisaged that the bale wrapper according to the invention may be used for wrapping more than two bales simultaneously together, for example, four bales, or even more, and in some cases uneven numbers of bales may be wrapped simultaneously together, for example, three, five or more.

It is also envisaged that the bale wrapper according to the invention may be used for wrapping bales other than rectangular or square bales, for example, bales of hexagonal or octagonal cross-section or the like. Needless to say, the bale wrapper according to the invention may be used for wrapping large round bales also.

While the bale wrapper has been described as comprising its own hydraulic power pack, it will of course be appreciated that in many cases, the hydraulic power supply may be provided directly by the tractor.

It will also of course be appreciated that any other suitable conveying means besides a slatted conveyor and a toothed chain conveyor could be used for transferring the bales from the ground into the bale wrapping location.

## Claims

1. A bale wrapping apparatus (1) for wrapping a parallelepiped bale (2) with film material (3), the apparatus comprising a main framework (5), a pair of spaced apart secondary support means (30) for supporting the bale in a bale wrapping location (33), a first drive means (52) being provided in at least one of the secondary support means (30) for operating the secondary support means (30) in a first mode for rotating the bale (2) about a first main axis (32) in the bale wrapping location (33), a pair of carrier means (31) connected to the main framework (5) for carrying the respective secondary support means (30), the respective carrier means (31) being moveable from a first position with the secondary support means (30) in an inoperative position disposed on respective opposite sides of the bale (2) in a pre-wrapping location (20) to a second position with the secondary support means (30) in an operative position with the bale (2) supported in the bale wrapping location (33) for urging the bale (2) from the pre-wrapping location (20) to the bale wrapping location (33), and a film carrier (66) for carrying wrapping film (70), the film carrier (66) being mounted on the main framework (5) and being revolvable about a second main axis (69) about the bale wrapping location (33) for dispensing wrapping film (70) to the bale (2) for wrapping thereof as the bale (2) is being rotated about the first main axis (32) by the respective secondary support means (30), the second main axis (69) being disposed at an angle greater than zero to the first main axis (32), **characterised in that** a main support means (22) is provided for supporting the bale (2) in the pre-wrapping location (20), and the respective secondary support means (30) are carried on the carrier means (31) and co-operate with the main support means (22) so that as the secondary support means (30) are being moved from the inoperative position to the operative position the respective secondary support means (30) engage the bale (2) in the pre-wrapping location (20) on the underside (57) of the bale (2) at respective opposite sides of the bale (2), and move the bale (2) from the pre-wrapping location (20) to the bale wrapping location (33).

2. Apparatus as claimed in Claim 1 **characterised in that** the respective carrier means (31) are moveable from the second to the first position for returning the secondary support means (30) from the operative position to the inoperative position for in turn returning a wrapped bale (2) to the main support means (22) with the wrapped bale supported by the respective secondary support means (30) on an underside (57) of the bale at respective opposite sides thereof.

3. Apparatus as claimed in Claim 1 or 2 **characterised in that** the respective secondary support means (30) are selectively operable in a second mode for maintaining the orientation of the bale (2) substantially constant as the bale (2) is being moved between the bale wrapping location (33) and the main support means (22).

4. Apparatus as claimed in Claim 3 **characterised in that** the respective secondary support means (30) are selectively operable in the second mode for maintaining the orientation of the bale (2) constant with the underside (57) of the wrapped bale (2) substantially horizontal as the bale (2) is being moved between the bale wrapping location (33) and the main support means (22).

5. Apparatus as claimed in any preceding claim **characterised in that** a detecting means (90) is provided for detecting the orientation of the respective secondary support means (30) relative to the main framework (5) for determining when the underside (57) of a bale (2) in the bale wrapping location (33) is lying in a substantially horizontal plane.

6. Apparatus as claimed in Claim 5 **characterised in that** one first drive means (52) is provided for each secondary support means (30), each first drive means being responsive to the detecting means (90) for orienting the bale (2) with its underside (57) lying in a horizontal plane while the bale is supported in the bale wrapping location (33) prior to returning the bale to the main support means (22).

7. Apparatus as claimed in any preceding claim **characterised in that** the respective carrier means (31) are constrained to move in registration with each other.

8. Apparatus as claimed in any preceding claim **characterised in that** each secondary support means (30) is pivotally carried on its corresponding carrier means (31) about a corresponding first pivot axis (37), the respective first pivot axes (37) being spaced apart from and parallel to each other and parallel to the first main axis (32).

9. Apparatus as claimed in Claim 8 when dependent on Claim 5 **characterised in that** the detecting means (90) is associated with each secondary support means (30) for detecting the orientation of the respective secondary support means (30) about the respective corresponding first pivot axes (37) relative to the main framework (5).

10. Apparatus as claimed in Claim 9 **characterised in that** the detecting means (70) detects when the angles of orientation of the respective secondary support means (30) about the respective first pivot axes (37) relative to the main framework (5) are similar but of opposite hand for determining when the bale (2) in the bale wrapping location (33) is horizontal.

11. Apparatus as claimed in Claims 9 or 10 **characterised in that** during a wrapping cycle the respective secondary support means (30) oscillate about their corresponding first pivot axes (37) a plurality of times, and during a wrapping cycle the angles of orientation of the respective secondary support means (30) about their corresponding first pivot axes (37) relative to the main framework (5) are similar but of opposite hand a plurality of times.

12. Apparatus as claimed in Claim 11 **characterised in that** the period of a wrapping cycle is determined by the detecting means (90) having detected the angles of orientation of the secondary support means (30) about the corresponding first pivot axes (37) relative to the main framework (5) being similar but of opposite hand a predetermined number of times.

13. Apparatus as claimed in any of Claims 8 to 12 **characterised in that** during each rotation of the bale (2) through 360° about the first main axis (32) the angles of orientation of the respective secondary support means (30) about the corresponding first pivot axes (37) relative to the main framework (5) are similar to each other but of opposite hand eight times.

14. Apparatus as claimed in any of Claims 8 to 13 **characterised in that** each secondary support means (30) comprises a pair of rotatably mounted spaced apart parallel support rollers (48) which are rotatable about respective rotational axes (47) for rotating the bale (2) about the first main axis (32), the rotational axes (47) of the respective support rollers (48) being parallel to the first pivot axes (37), and each first drive means (52) is operably coupled to at least one of the support rollers (48) of the corresponding secondary support means (30) for rotating the support roller (48) for in turn rotating the bale (2) about the first main axis (32).

15. Apparatus as claimed in Claim 14 **characterised in that** the support rollers (48) are located in the respective secondary support means (30) so that one of the support rollers (48) of each secondary support means engages the bale (2) adjacent the underside (57) thereof as the respective secondary support means (30) are being moved into engagement or out of engagement with the bale (2), and the other support roller (48) of each secondary support means (30) engages an adjacent upstanding side (58) of the bale (2) as the secondary support means (30) are being moved into or out of engagement with the bale (2).

16. Apparatus as claimed in Claim 14 or 15 **characterised in that** the secondary support means (30) are carried on the corresponding carrier means (31) so that the secondary support means (30) engage or disengage the bale on the main support means, with the respective secondary support means orientated such that the rotational axes (47) of the support rollers (48) of the respective secondary support means (30) lying in respective planes which extend at similar angles to a horizontal plane but of opposite hand.

17. Apparatus as claimed in any of Claims 14 to 16 **characterised in that** the respective first drive means (52) rotate the support rollers (48) in the same rotational direction relative to each other for rotating the bale (2) about the first main axis (32).

18. Apparatus as claimed in any of Claims 14 to 17 **characterised in that** each secondary support means (30) comprises a pair of spaced apart support members (35) for rotatably carrying the corresponding pair of support rollers (48).

19. Apparatus as claimed in any of Claims 8 to 18 **characterised in that** a means is provided for urging the respective secondary support means (30) in directions about the corresponding first pivot axes (37) against the directions in which the weight of the bale would tend to urge the respective secondary support means (30).

20. Apparatus as claimed in any of Claims 6 to 19 **characterised in that** each first drive means (52) is mounted on the corresponding carrier means (31) and transmits drive through the drive transmission means (38) so that the direction of drive about the corresponding first pivot axis (37) acts for urging the secondary support means (30) in the direction about the first pivot axis (37) opposite to the direction in which the weight of the bale (2) would tend to urge the secondary support means (30).

21. Apparatus as claimed in any preceding claim **characterised in that** the respective carrier means (31) are pivotally connected to the main framework (5) about corresponding parallel, spaced apart second pivot axes (42), the respective second pivot axes (42) being parallel to the first pivot axes (37) and being disposed on respective opposite sides of the main support means (22).

22. Apparatus as claimed in any preceding claim **characterised in that** the carrier means (31) move the secondary support means (30) in a generally downward outward direction from the operative position.

23. Apparatus as claimed in any preceding claim **characterised in that** the carrier means (31) urge the secondary support means (30) into engagement with the bale (2) in the pre-wrapping location (20) with an inward upward movement towards the bale.

24. Apparatus as claimed in any preceding claim **characterised in that** an urging means (55) is provided for urging each carrier means (31) between the first and second positions.

25. Apparatus as claimed in any preceding claim **characterised in that** the respective secondary support means (30) are raised by the respective carrier means (31) from the inoperative position to the operative position for supporting the bale (2) in the bale wrapping location (33) spaced apart above the main support means (22).

26. Apparatus as claimed in any preceding claim **characterised in that** a second drive means (73) is provided for revolving the film carrier (66) about the second main axis (69), and the second drive means (73) and the first drive means (52) are operably associated with each other so that the second drive means (73) operates in registration with the first drive means (52).

27. Apparatus as claimed in any preceding claim **characterised in that** a pair of film carriers (66) are provided, which are disposed at 180° relative to each other around the second main axis (69).

28. Apparatus as claimed in any preceding claim **characterised in that** the main support means (30) comprises a conveying means (21) for conveying a bale to and from the pre-wrapping location (20).

29. Apparatus as claimed in Claim 28 **characterised in that** the conveying means (22) extends generally parallel to the first main axis (32).

30. Apparatus as claimed in any of Claims 5 to 29 when dependent on Claim 5 **characterised in that** the detecting means (90) comprises a pair of detector members (90) which are moveable relative to each other, one of the detector members (90) being connected to one of the secondary support means (30), and the other detector member (90) being connected to the other of the secondary support means (30), each detector member (90) being moveable in response to a change in the orientation of the corresponding secondary support means (30) relative to the main framework (5).

31. Apparatus as claimed in Claim 30 **characterised in that** a sensing means (98) is mounted on one of the detector members (90), for sensing when the detector members (90) are in a position relative to each other which corresponds to the respective positions of the secondary support means (30) being such that the respective angles of orientation about the corresponding first pivot axes (37) relative to the main framework (5) of the secondary support means (30) are similar but of opposite hand.

32. Apparatus as claimed in any preceding claim **characterised in that** the respective first and second main axes (32,69) are disposed at an angle of approximately 90° to each other.

33. A method for wrapping a parallelepiped bale (2) with a film material (3), the method comprising the steps of urging a pair of secondary support means (30) from an inoperative position disposed on respective opposite sides of a bale in a pre-wrapping location (20) to an operative position with the bale (2) in a bale wrapping location (33) for engaging the bale (2) in the pre-wrapping location (20) and urging the bale (2) from the pre-wrapping location (20) to the bale wrapping location (33) supporting the bale (2) on the secondary support means (30) and rotating the bale (2) in the bale wrapping location (33) about a first main axis (32) by the secondary support means (30), revolving a roll (70) of the film material (3) around the bale wrapping location (33) about a second main axis (69) for dispensing the film material (3) from the roll (70) onto the bale (2) as the bale (2) is being rotated about the first main axis (32), the first and second main axes (32) and (69) being at an angle to each other greater than zero, **characterised in that** the bale (2) is supported in the pre-wrapping location (20) on a main support means (22), and the secondary support means (30) are moved from the inoperative position to the operative position for co-operating with the main support means (22) so that as the secondary support means (30) are being moved from the inoperative position to the operative position the respective secondary support means (30) engage the bale in the bale wrapping location on the main support means (22) on the underside (57) of the bale (2) at respective opposite sides of the bale (2) for moving the bale (2) from the pre-wrapping location to the bale wrapping location (33).

34. A method as claimed in Claim 33 **characterised in that** the bale (2) is lowered by the respective secondary support means (30) when wrapped from the bale wrapping location (33) to the pre-wrapping location (20) by moving the respective secondary support means (30) from the operative position to the inoperative position, and supporting the bale (2) by the respective secondary support means (30) on the underside (57) of the bale at respective opposite sides of the bale (2) as the bale (2) is being moved from the bale wrapping location (33) to the pre-wrapping location (20).

35. A method as claimed in Claim 33 or 34 **characterised in that** the orientation of the bale (2) is maintained substantially constant during moving of the bale (2) between the pre-wrapping location (20) and the bale wrapping location (33).

36. A method as claimed in any of Claims 33 to 35 **characterised in that** the number of angular increments of predetermined size through which the bale (2) is rotated about the first main axis (32) are counted for determining a wrapping cycle.

37. A method as claimed in any of Claims 33 to 36 **characterised in that** the . respective first and second main axes (32,69) are at an angle of 90° to each other.

38. A method for preparing silage from a bale of forage, using the method of any of Claims 33 to 37.

## Patentansprüche

1. Balleneinwickelgerät (1) zum Einwickeln eines parallelepipedförmigen Ballens (2) mit einem Folienmaterial (3), wobei das Gerät aufweist einen Hauptrahmen (5), ein Paar beabstandete sekundäre Halteeinrichtungen (30), um den Ballen in einer Ballenwickellage (33) zu halten, einen ersten Antrieb (52), der in zumindest einer der sekundären Halteeinrichtungen (30) vorgesehen ist, um die sekundären Halteeinrichtungen (30) in einem ersten Modus zu betätigen, um den Ballen (2) um eine erste Hauptachse (32) in der Ballenwickellage (33) zu drehen, ein Paar mit dem Hauptrahmen (5) verbundene Träger (31), um die jeweiligen sekundären Halteeinrichtungen (30) zu tragen, wobei die jeweiligen Träger (31) aus einer ersten Stellung, in der die sekundären Halteeinrichtungen (30) in einer Ruhestellung auf jeweiligen gegenüberliegenden Seiten des Ballens (2) in einer Vor-Wickellage (20) angeordnet sind, in eine zweite Stellung bewegbar sind, in der die sekundären Halteeinrichtungen (30) in einer Arbeitsstellung sind, wobei der Ballen (2) in der Ballenwickellage (33) gehalten wird, um den Ballen (2) von der Vor-Wickellage (20) zur Ballenwickellage (33) zu treiben, und einen Folienträger (66) zum Tragen einer Wickelfolie (70), wobei der Folienträger (66) auf dem Hauptrahmen (5) montiert und um eine zweite Hauptachse (69) um die Ballenwickellage (33) drehbar ist, um eine Wickelfolie (70) an den Ballen (2) abzugeben, um ihn einzuwickeln, während der Ballen (2) durch die jeweiligen Halteeinrichtungen (30) um die erste Hauptachse (32) gedreht wird, wobei die zweite Hauptachse (69) unter einem Winkel größer Null zur ersten Hauptachse (32) angeordnet ist, **dadurch gekennzeichnet, dass** eine Haupthalteeinrichtung (22) vorgesehen ist, um den Ballen (2) in der Vor-Wickellage (20) zu halten, und die jeweiligen sekundären Halteeinrichtungen (30) auf dem Träger (31) getragen werden und mit der Haupthalteeinrichtung (22) zusammenwirken, so dass, während die sekundären Halteeinrichtungen (30) aus der Ruhestellung zur Arbeitsstellung bewegt werden, die jeweiligen sekundären Halteeinrichtungen (30) am Ballen (2) in der Vor-Wickellage (20) auf der Unterseite (57) des Ballens (2) an jeweiligen gegenüberliegenden Seiten des Ballens (2) angreifen und den Ballen (2) von der Vor-Wickellage (20) in die Ballenwickellage (33) bewegen.

2. Gerät nach Anspruch 1, **dadurch gekennzeichnet, dass** die jeweiligen Träger (31) aus der zweiten in die erste Stellung bewegbar sind, um die sekundären Halteeinrichtungen (30) aus der Arbeitsstellung in die Ruhestellung zurückzuführen, um wiederum einen umwickelten Ballen (2) zur Haupthalteeinrichtung (22) zurückzuführen, wobei der umwickelte Ballen durch die jeweiligen sekundären Halteeinrichtungen (30) auf einer Unterseite (57) des Ballens an seinen jeweiligen gegenüberliegenden Seiten gehalten wird.

3. Gerät nach Anspruch 1 oder 2, **dadurch gekennzeichnet, dass** die jeweiligen sekundären Halteeinrichtungen (30) in einem zweiten Modus selektiv betätigbar sind, um die Orientierung des Ballens (2) im wesentlichen konstant zu halten, während der Ballen (2) zwischen der Ballenwickellage (33) und der Haupthalteeinrichtung (22) bewegt wird.

4. Gerät nach Anspruch 3, **dadurch gekennzeichnet, dass** die jeweiligen sekundären Halteeinrichtungen (30) im zweiten Modus selektiv betätigbar sind, um die Orientierung des Ballens (2) konstant zu halten, wobei die Unterseite (57) des umwickelten Ballens (2) im wesentlichen horizontal ist, während der Ballen (2) zwischen der Ballenwickellage (33) und der Haupthalteeinrichtung (22) bewegt wird.

5. Gerät nach einem der vorhergehenden Ansprüche, **dadurch gekennzeichnet, dass** eine Feststelleinrichtung (90) vorgesehen ist, um die Orientierung der jeweiligen sekundären Halteeinrichtungen (30) in Bezug auf den Hauptrahmen (5) festzustellen, um zu bestimmen, wann die Unterseite (57) eines Ballens (2) in der Ballenwickellage (33) in einer im wesentlichen horizontalen Ebene liegt.

6. Gerät nach Anspruch 5, **dadurch gekennzeichnet, dass** für jede sekundäre Halteeinrichtung (30) ein erster Antrieb (52) vorgesehen ist, wobei jeder erste Antrieb auf die Feststelleinrichtung (90) anspricht, um den Ballen (2) mit seiner in einer horizontalen Ebene liegenden Unterseite (57) zu orientieren, während der Ballen in der Ballenwickellage (33) gehalten wird, bevor der Ballen zur Haupthalteeinrichtung (22) zurückgeführt wird.

7. Gerät nach einem der vorhergehenden Ansprüche, **dadurch gekennzeichnet, dass** die jeweiligen Träger (31) gezwungen sind, sich miteinander abgestimmt zu bewegen.

8. Gerät nach einem der vorhergehenden Ansprüche, **dadurch gekennzeichnet, dass** jede sekundäre Halteeinrichtung (30) auf ihrem entsprechenden Träger (31) um eine entsprechende erste Schwenkachse (37) schwenkbar getragen wird, wobei die jeweiligen ersten Schwenkachsen (37) voneinander beabstandet und zueinander parallel und zur ersten Hauptachse (32) parallel sind.

9. Gerät nach Anspruch 8, in Verbindung mit Anspruch 5, **dadurch gekennzeichnet, dass** die Feststelleinrichtung (90) mit jeder sekundären Halteeinrichtung (30) verbunden ist, um die Orientierung der jeweiligen sekundären Halteeinrichtungen (30) um die jeweilige entsprechende erste Schwenkachse (37) in Bezug auf den Hauptrahmen (5) festzustellen.

10. Gerät nach Anspruch 9, **dadurch gekennzeichnet, dass** die Feststelleinrichtung (70) feststellt, wann die Orientierungswinkel der jeweiligen sekundären Halteeinrichtungen (30) um die jeweiligen ersten Schwenkachsen (37) in Bezug auf den Hauptrahmen (5) ähnlich, aber entgegengesetzt gerichtet sind, um zu bestimmen, wann der Ballen (2) in der Ballenwickellage (33) horizontal ist.

11. Gerät nach Anspruch 9 oder 10, **dadurch gekennzeichnet, dass** während eines Wickelzyklus die jeweiligen sekundären Halteeinrichtungen (30) mehrere Male um ihre entsprechenden ersten Schwenkachsen (37) oszillieren und während eines Wickelzyklus die Orientierungswinkel der jeweiligen sekundären Halteeinrichtungen (30) um ihre entsprechenden ersten Schwenkachsen (37) in Bezug auf den Hauptrahmen (5) ähnlich, aber mehrfach entgegengesetzt gerichtet sind.

12. Gerät nach Anspruch 11, **dadurch gekennzeichnet, dass** die Periode eines Wickelzyklus durch die Feststelleinrichtung (90) bestimmt wird, die festgestellt hat, dass die Orientierungswinkel der sekundären Halteeinrichtungen (30) um die entsprechenden ersten Schwenkachsen (37) in Bezug auf den Hauptrahmen (5) ähnlich, aber eine vorbestimmte Anzahl von Malen entgegengesetzt gerichtet sind.

13. Gerät nach einem der Ansprüche 8 bis 12, **dadurch gekennzeichnet, dass** während jeder Drehung des Ballens (2) um 360° um die erste Hauptachse (32) die Orientierungswinkel der jeweiligen sekundären Halteeinrichtungen (30) um die entsprechenden ersten Schwenkachsen (37) in Bezug auf den Hauptrahmen (2) einander ähnlich, aber achtfach entgegengesetzt gerichtet sind.

14. Gerät nach einem der Ansprüche 8 bis 13, **dadurch gekennzeichnet, dass** jede sekundäre Halteeinrichtung (30) ein Paar drehbar montierte beabstandete parallele Halterollen (48) aufweist, die um jeweilige Drehachsen (47) drehbar sind, um den Ballen (2) um die erste Hauptachse (32) zu drehen, wobei die Drehachsen (47) der jeweiligen Halterollen (48) zu den ersten Schwenkachsen (37) parallel sind, und jeder erste Antrieb (52) mit zumindest einer der Halterollen (48) der entsprechenden sekundären Halteeinrichtungen (30) betätigbar gekoppelt ist, um die Halterolle (48) zu drehen, um wiederum den Ballen (2) um die erste Hauptachse (32) zu drehen.

15. Gerät nach Anspruch 14, **dadurch gekennzeichnet, dass** die Halterollen (48) in der jeweiligen sekundären Halteeinrichtung (30) liegen, so dass eine der Halterollen (48) jeder sekundären Halteeinrichtung am Ballen (2) seiner Unterseite (57) benachbart angreift, während die jeweiligen sekundären Halteeinrichtungen (30) in einen Eingriff oder aus einem Eingriff mit dem Ballen (2) bewegt werden, und die andere Halterolle (48) jeder sekundären Halteeinrichtung (30) an einer benachbarten aufrechten Seite (58) des Ballens (2) angreift, während die sekundären Halteeinrichtungen (30) gerade in einen Eingriff oder aus einem Eingriff mit dem Ballen (2) bewegt werden.

16. Gerät nach Anspruch 14 oder 15, **dadurch gekennzeichnet, dass** die sekundären Halteeinrichtungen (30) auf den entsprechenden Trägern (31) getragen werden, so dass die sekundären Halteeinrichtungen (30) am Ballen auf der Haupthalteeinrichtung angreifen oder sich von ihm lösen, wobei die jeweiligen sekundären Halteeinrichtungen so orientiert sind, dass die Drehachsen (47) der Halterollen (48) der jeweiligen sekundären Halteeinrichtungen (30) in jeweiligen Ebenen liegen, die sich unter ähnlichen, aber entgegengesetzt gerichteten Winkeln zu einer horizontalen Ebene erstrecken.

17. Gerät nach einem der Ansprüche 14 bis 16, **dadurch gekennzeichnet, dass** die jeweiligen ersten Antriebe (52) die Halterollen (48) in der gleichen Drehrichtung in Bezug aufeinander drehen, um den Ballen (2) um die erste Hauptachse (32) zu drehen.

18. Gerät nach einem der Ansprüche 14 bis 17, **dadurch gekennzeichnet, dass** jede sekundäre Halteeinrichtung (30) ein Paar beabstandete Halteelemente (35) aufweist, um das entsprechende Paar Halterollen (48) drehbar zu tragen.

19. Gerät nach einem der Ansprüche 8 bis 18, **dadurch gekennzeichnet, dass** eine Einrichtung vorgesehen ist, um die jeweiligen sekundären Halteeinrichtungen (32) in Richtungen um die entsprechenden ersten Schwenkachsen (37) gegen die Richtungen zu treiben, in die das Gewicht des Ballens die jeweiligen sekundären Halteeinrichtungen (30) zu drängen sucht.

20. Gerät nach einem der Ansprüche 6 bis 19, **dadurch gekennzeichnet, dass** je ein erster Antrieb (52) auf dem entsprechenden Träger (31) montiert ist und einen Antrieb über das Antriebsgetriebe (38) überträgt, so dass die Antriebsrichtung um die entsprechende erste Schwenkachse (37) dahingehend wirkt, die sekundären Halteeinrichtungen (30) in die Richtung um die erste Schwenkachse (37) zu treiben, die zu der Richtung entgegengesetzt ist, in die das Gewicht des Ballens (2) die sekundären Halteeinrichtungen (30) zu drängen sucht.

21. Gerät nach einem der vorhergehenden Ansprüche, **dadurch gekennzeichnet, dass** die jeweiligen Träger (31) mit dem Hauptrahmen (5) um entsprechende parallele beabstandete zweite Schwenkachsen (42) schwenkbar verbunden sind, wobei die jeweiligen zweiten Schwenkachsen (42) zu den ersten Schwenkachsen (37) parallel und auf jeweiligen gegenüberliegenden Seiten der Haupthalteeinrichtung (22) angeordnet sind.

22. Gerät nach einem der vorhergehenden Ansprüche, **dadurch gekennzeichnet, dass** die Träger (31) die sekundären Halteeinrichtungen (30) in einer im wesentlichen nach unten und außen gerichteten Richtung aus der Arbeitsstellung bewegen.

23. Gerät nach einem der vorhergehenden Ansprüche, **dadurch gekennzeichnet, dass** die Träger (31) die sekundären Halteeinrichtungen (30) in einen Eingriff mit dem Ballen (2) in der Vor-Wickellage (20) mit einer nach innen gerichteten Aufwärtsbewegung in Richtung auf den Ballen treiben.

24. Gerät nach einem der vorhergehenden Ansprüche, **dadurch gekennzeichnet, dass** eine Antriebseinrichtung (55) vorgesehen ist, um jeden Träger (31) zwischen der ersten und zweiten Stellung zu treiben.

25. Gerät nach einem der vorhergehenden Ansprüche, **dadurch gekennzeichnet, dass** die jeweiligen sekundären Halteeinrichtungen (30) durch die jeweiligen Träger (31) aus der Ruhestellung zur Arbeitsstellung angehoben werden, um den Ballen (2) in der Ballenwickellage (33) oberhalb der Haupthalteeinrichtung (22) beabstandet zu halten.

26. Gerät nach einem der vorhergehenden Ansprüche, **dadurch gekennzeichnet, dass** ein sekundärer Antrieb (73) vorgesehen ist, um den Folienträger (66) um die zweite Hauptachse (69) umlaufen zu lassen, und der zweite Antrieb (73) und der erste Antrieb (52) funktionsfähig miteinander verbunden sind, so dass der zweite Antrieb (73) abgestimmt mit dem ersten Antrieb (52) arbeitet.

27. Gerät nach einem der vorhergehenden Ansprüche, **dadurch gekennzeichnet, dass** ein Paar Folienträger (66) vorgesehen ist, die unter 180° in Bezug aufeinander um die zweite Hauptachse (69) herum angeordnet sind.

28. Gerät nach einem der vorhergehenden Ansprüche, **dadurch gekennzeichnet, dass** die Haupthalteeinrichtung (30) eine Fördereinrichtung (21) aufweist, um einen Ballen in die und aus der Vor-Wickellage (20) zu befördern.

29. Gerät nach Anspruch 28, **dadurch gekennzeichnet, dass** die Fördereinrichtung (22) im wesentlichen parallel zur ersten Hauptachse (32) verläuft.

30. Gerät nach einem der Ansprüche 5 bis 29, wenn abhängig von Anspruch 5, **dadurch gekennzeichnet, dass** die Feststelleinrichtung (90) ein Paar Detektorelemente (90) aufweist, die in Bezug aufeinander beweglich sind, wobei eines der Detektorelemente (90) mit einer der sekundären Halteeinrichtungen (30) verbunden ist und das andere Detektorelement (90) mit der anderen der sekundären Halteeinrichtungen (30) verbunden ist, wobei jedes Detektorelement (90) als Antwort auf eine Änderung in der Orientierung der entsprechenden sekundären Halteeinrichtung (30) in Bezug auf den Hauptrahmen (5) beweglich ist.

31. Gerät nach Anspruch 30, **dadurch gekennzeichnet, dass** auf einem der Detektorelemente (90) eine Abfühleinrichtung (98) montiert ist, um abzufühlen, wann die Detektorelemente (90) in einer Position in Bezug aufeinander sind, die den jeweiligen Stellungen der sekundären Halteeinrichtungen (30) entspricht, so dass die jeweiligen Orientierungswinkel um die entsprechenden ersten Schwenkachsen (37) in Bezug auf den Hauptrahmen (5) der sekundären Halteeinrichtungen (30) ähnlich, aber entgegengesetzt gerichtet sind.

32. Gerät nach einem der vorhergehenden Ansprüche, **dadurch gekennzeichnet, dass** die jeweilige erste und zweite Hauptachse (32, 69) unter einem Winkel von ungefähr 90° zueinander angeordnet sind.

33. Verfahren zum Einwickeln eines parallelepipedförmigen Ballens (2) mit einem Folienmaterial (3), wobei das Verfahren die Schritte aufweist, bei denen ein Paar auf jeweiligen gegenüberliegenden Seiten eines Ballens in einer Vor-Wickellage (20) angeordnete sekundäre Halteeinrichtungen (30) aus einer Ruhestellung zu einer Arbeitsstellung mit dem Ballen (2) in einer Ballenwickellage (33) getrieben wird, um am Ballen (2) in der Vor-Wickellage (20) anzugreifen und den Ballen (2) aus der Vor-Wickellage (20) zur Ballenwickellage (33) zu treiben, der Ballen (2) auf den sekundären Halteeinrichtungen (30) gehalten und der Ballen (2) in der Ballenwickellage (33) durch die sekundären Halteeinrichtungen (30) um eine erste Hauptachse (32) gedreht wird, man eine Rolle (70) des Folienmaterials (3) um die Ballenwickellage (33) um eine zweite Hauptachse (69) umlaufen läßt, um das Folienmaterial (3) von der Rolle (70) auf den Ballen (2) abzugeben, während der Ballen (2) um die erste Hauptachse (32) gedreht wird, wobei die erste und zweite Hauptachse (32) und (69) unter einem Winkel größer Null zueinander liegen, **dadurch gekennzeichnet, dass** der Ballen (2) in der Vor-Wickellage (20) auf einer Haupthalteeinrichtung (22) gehalten wird und die sekundären Halteeinrichtungen (30) aus der Ruhestellung zur Arbeitsstellung bewegt werden, um mit der Haupthalteeinrichtung (22) zusammenzuwirken, so dass, während die sekundären Halteeinrichtungen (30) aus der Ruhestellung zur Arbeitsstellung bewegt werden, die jeweiligen sekundären Halteeinrichtungen (30) am Ballen in der Ballenwickellage auf der Haupthalteeinrichtung (22) auf der Unterseite (57) des Ballens (2) an jeweiligen gegenüberliegenden Seiten des Ballens (2) angreifen, um den Ballen (2) von der Vor-Wickellage zur Ballenwickellage (33) zu bewegen.

34. Verfahren nach Anspruch 33, **dadurch gekennzeichnet, dass** der Ballen (2) durch die jeweiligen sekundären Halteeinrichtungen (30), wenn er gewickelt ist, von der Ballenwickellage (33) zur Vor-Wickellage (20) abgesenkt wird, indem die jeweiligen sekundären Halteeinrichtungen (30) aus der Arbeitsstellung zur Ruhestellung bewegt werden und der Ballen (2) durch die jeweiligen sekundären Halteeinrichtungen (30) auf der Unterseite (57) des Ballens an jeweiligen gegenüberliegenden Seiten des Ballens (2) gehalten wird, während der Ballen (2) von der Ballenwickellage (33) zur Vor-Wickellage (20) bewegt wird.

35. Verfahren nach Anspruch 33 oder 34, **dadurch gekennzeichnet, dass** die Orientierung des Ballens (2) während eines Bewegens des Ballens (2) zwischen der Vor-Wickellage (20) und der Ballenwickellage (33) im wesentlichen konstant gehalten wird.

36. Verfahren nach einem der Ansprüche 33 bis 35, **dadurch gekennzeichnet, dass** die Anzahl von Winkelinkrementen einer vorbestimmten Größe, um die der Ballen (2) um die erste Hauptachse (32) gedreht wird, zum Bestimmen eines Wickelzyklus gezählt wird.

37. Verfahren nach einem der Ansprüche 33 bis 36, **dadurch gekennzeichnet, dass** die jeweilige erste und zweite Hauptachse (32, 69) in einem Winkel von 90° zueinander liegen.

38. Verfahren zum Präparieren einer Silage aus einem Futterballen unter Verwendung des Verfahrens nach einem der Ansprüche 33 bis 37.

## Revendications

1. Emballeuse de bottes (1) pour emballer une botte parallélépipédique (2) avec un film de matériau (3), l'emballeuse comprenant un châssis principal (5), une paire de moyens de supports secondaires mutuellement espacés (30) pour supporter la botte à une position d'emballage (33), un premier moyen d'entraînement (52) prévu dans au moins l'un des moyens de support secondaires (30) pour faire fonctionner les moyens de support secondaires (30) dans un premier mode destiné à mettre la botte (2) en rotation autour d'un premier axe principal (32) à la position d'emballage de botte (33), une paire de moyens porteurs (31) reliés au châssis principal (5) pour porter les moyens de support secondaires respectifs (30), les moyens porteurs respectifs (31) étant mobiles d'une première position à laquelle les moyens de support secondaires (30) sont en position inactive et sont disposés sur des côtés opposés respectifs de la botte (2) dans une position de préemballage (20), à une seconde position à laquelle les moyens de support secondaires (30) sont en position active, la botte (2) étant supportée à la position d'emballage de botte (33) pour repousser la botte (2) de la position de préemballage (20) à la position d'emballage de botte (33), et un porte-film (66) pour porter un film d'emballage (70), le porte-film (66) étant monté sur le châssis principal (5) et pouvant être mis en rotation autour d'un second axe principal (69) et autour de la position d'emballage (33) pour débiter le film d'emballage (70) sur la botte (2) afin d'emballer cette dernière lorsque la botte (2) est mise en rotation autour du premier axe principal (32) par les moyens de support secondaires respectifs (30), le second axe principal (69) étant disposé en formant un angle supérieur à zéro par rapport à l'axe principal (32), **caractérisé en ce qu'**un moyen de support principal (22) est prévu pour supporter la botte (2) à la position de préemballage (20), et **en ce que** les moyens de support secondaires respectifs (30) sont portés par les moyens porteurs (31) et coopèrent avec le moyen de support principal (22) afin que lorsque les moyens de support secondaires (30) sont déplacés de la position inactive à la position active, les moyens de support secondaires respectifs (30) s'engagent sur la botte (2) à la position de préemballage (20) sur la face inférieure (57) de la botte (2) et sur des côtés opposés respectifs de la botte (2), et déplacent la botte (2) de la position de préemballage (20) à la position d'emballage de botte (33).

2. Emballeuse selon la revendication 1, **caractérisée en ce que** les moyens porteurs respectifs (31) sont mobiles de la seconde à la première position pour ramener les moyens de support secondaires (30) de la position active à la position inactive afin de ramener tour à tour une botte emballée (2) vers le moyen de support principal (22), la botte emballée étant supportée par les moyens de support secondaires respectifs (30) sur une face inférieure (57) de la botte et sur des côtés opposés respectifs de celle-ci.

3. Emballeuse selon la revendication 1 ou 2, **caractérisée en ce que** les moyens de support secondaires respectifs (30) peuvent être mis en oeuvre de façon sélective dans un second mode pour maintenir sensiblement constante l'orientation de la botte (2) lorsque la botte (2) est déplacée entre la position d'emballage de botte (33) et le moyen de support principal (22).

4. Emballeuse selon la revendication 3, **caractérisée en ce que** les moyens de support secondaires respectifs (30) peuvent être mis en oeuvre de façon sélective dans le second mode pour maintenir constante l'orientation de la botte (2), la face inférieure (57) de la botte emballée (2) étant sensiblement horizontale lorsque la botte (2) est déplacée entre la position d'emballage de botte (33) et le moyen de support principal (22).

5. Emballeuse selon l'une quelconque des revendications précédentes, **caractérisée en ce qu'**un moyen de détection (90) est prévu pour détecter l'orientation des moyens de support secondaires respectifs (30) par rapport au châssis principal (5) pour déterminer l'instant où la face inférieure (57) d'une botte (2), à la position d'emballage de bottes (33), se situe dans un plan sensiblement horizontal.

6. Emballeuse selon la revendication 5, **caractérisée en ce qu'**un premier moyen d'entraînement (52) est prévu pour chaque moyen de support secondaire (30), chaque premier moyen d'entraînement étant sensible au moyen de détection (90) pour orienter la botte (2) de façon que sa face inférieure (57) se situe dans un plan horizontal pendant que la botte est supportée à la positon d'emballage de botte (33) avant le retour de la botte vers le moyen de support principal (22).

7. Emballeuse selon l'une quelconque des revendications précédentes, **caractérisé en ce que** les moyens porteurs respectifs (31) sont contraints de se déplacer en alignement l'un par rapport l'autre.

8. Emballeuse selon l'une quelconque des revendications précédentes, **caractérisée en ce que** chaque moyen de support secondaires (30) est porté de façon pivotante sur son moyen porteur correspondant (31) autour d'un premier axe de pivotement correspondant (37), les premiers axes de pivotement respectifs (37) étant mutuellement espacés, étant parallèles l'un à l'autre et étant parallèles au premier axe principal (32).

9. Emballeuse selon la revendication 8, lorsqu'elle dépend de la revendication 5, **caractérisée en ce que** le moyen de détection (90) est associé à chaque moyen de support secondaire (30) pour détecter l'orientation des moyens de support secondaires respectifs (30) autour des premiers axes de pivotement correspondants respectifs (37) par rapport au châssis principal (5).

10. Emballeuse selon la revendication 9, **caractérisée en ce que** le moyen de détection (70) détecte l'instant où les angles d'orientation des moyens de support secondaires respectifs (30) autour des premiers axes de pivotement respectifs (37) par rapport au châssis principal (5) sont semblables mais de sens opposé pour déterminer l'instant où la botte (2), à la position d'emballage de botte (33), est horizontale.

11. Emballeuse selon la revendication 9 ou 10, **caractérisée en ce que** pendant un cycle d'emballage, les moyens de support secondaires respectifs (30) oscillent une pluralité de fois autour de leurs premiers axes de pivotement correspondants (37), et **en ce que** pendant un cycle d'emballage, les angles d'orientation des moyens de support secondaires respectifs (30) autours de leurs premiers axes de pivotement correspondants (37) par rapport au châssis principal (5), sont une pluralité de fois semblables mais de sens opposé.

12. Emballeuse selon la revendication 11, **caractérisée en ce que** la période d'un cycle d'emballage est déterminée par le fait que le moyen de détection (90) a détecté que les angles d'orientation des moyens de support secondaires (30) autour des premiers axes de pivotement correspondants (37) par rapport au châssis principal (5) sont un nombre prédéterminé de fois semblables mais de sens opposé.

13. Emballeuse selon l'une quelconque des revendications 8 à 12, **caractérisée en ce que** pendant chaque rotation de la botte (2) de 360° autour du premier axe principal (32), les angles d'orientation des moyens de support secondaires respectifs (30) autour des premiers axes de pivotement correspondants (37) par rapport au châssis principal (5) sont huit fois semblables mais de sens opposé.

14. Emballeuse selon l'une quelconque des revendications 8 à 13, **caractérisée en ce** chacun des moyens de support secondaires (30) comprend une paire de rouleaux de support parallèles mutuellement espacés et montés de façon rotative (48), qui peuvent être mis en rotation autour d'axes de rotation respectifs pour mettre en rotation la botte (2) autour du premier axe principal (32), les axes de rotation (47) des rouleaux de support respectifs (48) étant parallèles aux premiers axes de pivotement (37), et chacun des premiers moyens d'entraînement (52) étant fonctionnellement couplé à au moins l'un des rouleaux de support (48) des moyens de support secondaires correspondants (30) pour mettre en rotation le rouleau de support (48) afin qu'il mette lui-même en rotation la botte (2) autour du premier axe principal (32).

15. Emballeuse selon la revendication 14, **caractérisée en ce que** les rouleaux de support (48) sont placés dans les moyens de support secondaires respectifs (30) afin que l'un des rouleaux de support (48) de chaque moyen de support secondaire s'engage sur la botte (2) à proximité immédiate de sa face inférieure (57) lorsque les moyens de support secondaires respectifs (30) sont déplacés pour s'engager sur ou se dégager de la botte (2) et que l'autre rouleau de support (48) de chaque moyen de support secondaire (30) s'engage sur une face verticale adjacente (58) de la botte (2) lorsque les moyens de support secondaires (30) sont déplacés de façon à s'engager sur ou à de dégager de la botte (2).

16. Emballeuse selon la revendication 14 ou 15, **caractérisée en ce que** les moyens de support secondaires (30) sont portés par les moyens porteurs correspondants (31) afin que les moyens de support secondaires (30) s'engagent sur ou se dégagent de la botte sur le moyen de support principal, les moyens de support secondaires respectifs étant orientés de façon que les axes de rotation (47) des rouleaux de support (48) des moyens de support secondaires respectifs (30) se situent dans des plans respectifs qui s'étendent selon des angles semblables par rapport à un plan horizontal mais en sens opposé.

17. Emballeuse selon l'une quelconque des revendications 14 à 16, **caractérisée en ce que** les premiers moyens d'entraînement respectifs (52) mettent en rotation les rouleaux de support (48) dans le même sens de rotation l'un par rapport à l'autre pour mettre en rotation la botte (2) autour du premier axe principal (32).

18. Emballeuse selon l'une quelconque des revendications 14 à 17, **caractérisée en ce que** chaque moyen de support secondaire (30) comprend une paire d'éléments de support mutuellement espacés (35) pour porter de façon rotative la paire correspondante de rouleaux de support (48).

19. Emballeuse selon l'une quelconque des revendications 8 à 18, **caractérisée en ce qu'**un moyen est prévu pour repousser les moyens de support secondaires respectifs (30) dans des directions qui, par rapport aux premiers axes de pivotement correspondants (37), sont opposées aux directions dans lesquelles le poids de la botte tendrait à repousser les moyens de support secondaires respectifs (30).

20. Emballeuse selon l'une quelconque des revendications 6 à 19, **caractérisée en ce que** chaque premier moyen d'entraînement (52) est monté sur les moyens porteurs correspondants (31) et transmet un entraînement par l'intermédiaire des moyens de transmission d'entraînement (38) afin que la direction d'entraînement autour du premier axe de pivotement correspondant (37) ait pour effet de repousser les moyens de support secondaires (30) dans une direction, par rapport au premier axe de pivotement (37), qui est opposée à la direction dans laquelle le poids de la botte (2) tendrait à repousser les moyens de support secondaires (30).

21. Emballeuse selon l'une quelconque des revendications précédentes, **caractérisée en ce que** les moyens porteurs respectifs (31) sont reliés de façon pivotante au châssis principal (5) autour de seconds axes de pivotement mutuellement espacés et parallèles correspondants (42), les seconds axes de pivotement respectifs (42) étant parallèles aux premiers axes de pivotement (37) et étant disposés sur des côtés opposés respectifs du moyen de support principal (22).

22. Emballeuse selon l'une quelconque des revendications précédentes, **caractérisée en ce que** les moyens porteurs (31) déplacent les moyens de support secondaires (30) dans une direction globalement orientée vers le bas par rapport à la position active.

23. Emballeuse selon l'une quelconque des revendications précédentes, **caractérisée en ce que** les moyens porteurs (31) repoussent les moyens de support secondaires (30) pour les amener à s'engager sur la botte (2) à la position de préemballage (20) avec un mouvement orienté vers l'intérieur, vers le haut et vers la botte .

24. Emballeuse selon l'une quelconque des revendications précédentes, **caractérisée en ce qu'**un moyen de poussée (55) est prévu pour repousser chaque moyen porteur (31) entre les première et seconde positions.

25. Emballeuse selon l'une quelconque des revendications précédentes, **caractérisée en ce que** les moyens de support secondaires respectifs (30) sont soulevés par les moyens porteurs respectifs (31) de la position inactive à la position active pour supporter la botte (2) à la position d'emballage de botte (33) qui est espacée au-dessus du moyen de support principal (22).

26. Emballeuse selon l'une quelconque des revendications précédentes, **caractérisée en ce qu'**un second moyen d'entraînement (73) est prévu pour faire tourner le porte-film (66) autour du second axe principal (69), et **en ce que** le second moyen d'entraînement (73) et le premier moyen d'entraînement (52) sont fonctionnellement associés l'un à l'autre afin que le second moyen d'entraînement (73) fonctionne en alignement avec le premier moyen d'entraînement (52).

27. Emballeuse selon l'une quelconque des revendications précédentes, **caractérisée en ce qu'**une paire de porte-films (66) sont prévus et sont disposés à 180° l'un par rapport à l'autre autour du second axe principal (69).

28. Emballeuse selon l'une quelconque des revendications précédentes, **caractérisée en ce que** le moyen de support principal (30) comprend un moyen transporteur (21) pour transporter une botte vers et en provenance de la position de préemballage (20).

29. Emballeuse selon la revendication 28, **caractérisée en ce que** le moyen transporteur (22) s'étend globalement parallèlement au premier axe principal (32).

30. Emballeuse selon l'une quelconque des revendications 5 à 29 lorsqu'elle dépend de la revendication 5, **caractérisée en ce que** le moyen de détection (90) comprend deux éléments détecteurs (90) qui sont mobiles l'un par rapport à l'autre, l'un des éléments détecteurs (90) étant relié à l'un des moyens de support secondaires (30), et l'autre élément détecteur (90) étant relié à l'autre des moyens de support secondaires (30), chaque élément détecteur (90) étant mobile en réponse à un changement d'orientation des moyens de support secondaires correspondants (30) par rapport au châssis principal (5).

31. Emballeuse selon la revendication 30, **caractérisée en ce qu'**un moyen de détection (98) est monté sur l'un des éléments détecteurs (90), pour détecter l'instant où les éléments détecteurs (90) sont à une position l'un par rapport à l'autre qui correspond aux positions respectives des moyens de support secondaires (30), de telle sorte que les angles d'orientation respectifs autour des premiers axes de pivotement correspondants (37) par rapport au châssis principal (5) des moyens de support secondaires (30) sont semblables mais de sens opposé.

32. Emballeuse selon l'une quelconque des revendications précédentes, **caractérisée en ce que** les premiers et seconds axes principaux respectifs (32, 69) sont disposés selon un angle d'environ 90° l'un par rapport à l'autre.

33. Procédé d'emballage d'une botte parallélépipédique (2) avec un film de matériau (3), le procédé comprenant les étapes de poussée d'une paire de moyens de supports secondaires (30) d'une position inactive disposée sur des côtés opposés respectifs d'une botte dans une position de préemballage (20), à une position active à laquelle la botte (2) est dans une position d'emballage de botte (33) pour l'engagement sur la botte (2) dans la position de préemballage (20) et repousser la botte (2) de la position de préemballage (20) vers la position d'emballage de botte (33) en faisant en sorte que la botte (2) soit supportée sur les moyens de support secondaires (30) et en mettant en rotation la botte (2) dans la position d'emballage de botte (33) autour d'un premier axe principal (32) à l'aide des moyens de support secondaires (30), en faisant tourner un rouleau (70) du film de matériau (3) autour de la position d'emballage de botte (33) et autour d'un second axe principal (69) pour débiter le film de matériau (3) du rouleau (70) sur la botte (2) lorsque la botte (2) est en rotation autour du premier axe principal (32), les premier et second axes principaux (32) et (69) formant un angle l'un par rapport à l'autre qui est supérieur à zéro, **caractérisé en ce que** la botte (2) est supportée, dans la position de préemballage (20), sur un premier moyen de support (22), et **en ce que** les moyens de support secondaires (30) sont déplacés de la position inactive à la position active pour coopérer avec le moyen de support principal (22) afin que lorsque les moyens de support secondaires (30) sont déplacés de la position inactive à la position active, les moyens de support secondaires respectifs (30) s'engagent sur la botte à la position d'emballage de botte, sur le moyen de support principal (2), sur la face inférieure (57) de la botte (2) et sur les côtés opposés respectifs de la botte (2) pour déplacer la botte (2) de la position de préemballage à laa position d'emballage de botte (33).

34. Procédé selon la revendication 33, **caractérisé en ce que** la botte (2) est abaissée par les moyens de support secondaires respectifs (30) lorsqu'elle est emballée de la position d'emballage de botte (33) vers la position de préemballage (20) par déplacement des moyens de support secondaires respectifs (30) de la position active à la position inactive, et en faisant en sorte que la botte (2) soit supportée par les moyens de support secondaires respectifs (30) sur la face inférieure (57) de la botte et sur les côtés opposés respectifs de la botte (2) lorsque la botte (2) est déplacée de la position d'emballage de botte (33) vers la position de préemballage (20).

35. Procédé selon la revendication 33 ou 34, **caractérisé en ce que** l'orientation de la botte (2) est maintenue sensiblement constante pendant le déplacement de la botte (2) entre la position de préemballage (20) et la position d'emballage de botte (33).

36. Procédé selon l'une quelconque des revendications 33 à 35, **caractérisé en ce que** le nombre d'incréments angulaires de taille prédéterminée selon lesquels la botte (2) est mise en rotation autour du premier axe principal (32) est compté pour déterminer un cycle d'emballage.

37. Procédé selon l'une quelconque des revendications 33 à 36, **caractérisé en ce que** les premiers et seconds axes principaux respectifs (32, 69) forment un angle de 90° l'un par rapport à l'autre.

38. Procédé pour préparer du fourrage à partir d'une botte de fourrage en utilisant le procédé selon l'une quelconque des revendications 33 à 37.
